# EUROPEAN PATENT APPLICATION

(11) **EP 4 810 985 A1**
(43) Date of publication of application: **23.09.2026**
(21) Application number: 25305353.2
(22) Date of filing: 17.03.2025
(51) Int. Cl.: G01S 7/48, G01S 7/4863, G01S 7/4865, G01S 7/487, G01S 7/4914, G01S 7/4915, G01S 7/493, G01S 17/08, G01S 17/894

(54) **FILTERING METHOD AND DEVICE FOR PROCESSING A TIME SIGNAL BY TEMPORAL GAUSSIAN AND FLICKER NOISE REDUCTION**

(71) Applicant: STMicroelectronics International N.V., 1228 Plan-les-Ouates, Geneva (CH)
(72) Inventor: KHELLAF, Feriel, 69001 Lyon (FR); REBIERE, Valentin, 38000 Grenoble (FR)
(74) Representative: Casalonga

(57) **Abstract**

A filtering method is proposed for processing a time signal **X** by temporal noise reduction. It comprises at least the following steps: at each instant k, selecting a candidate variable when the current value x_{(n,m)}(k,p) of the time signal **X** is included in the current value of a corresponding confidence interval; updating a current value of occurrence scores; when the current value x_{(n,m)}(k,p) is only included in the corresponding confidence interval, then determining a current value of the selected candidate variable by averaging its precedent value at the preceding instant k-1 with the current value x_{(n,m)}(k,p); providing a filtered value xf_{(n,m)}(k,p) of the time signal **X** at the current instant k, as being equal to the current value of the candidate variable having the highest occurrence score.

## Description

### TECHNICAL FIELD

The present disclosure generally relates to a filtering method and a filtering device configured for processing a time signal by temporal noise reduction. It is particularly applicable to the field of Time-of-Flight (ToF) depth map sensor.

### BACKGROUND

Devices for determining the distance (or range) of objects or targets are known. For example, image sensors can provide information about the depth of a scene, i.e. the distance to the image sensor of objects located in the scene.

These sensor devices may include Time-of-Flight (ToF) sensors, which involve emitting an optical signal toward the scene and detecting the optical signal reflected by the objects. The analysis of the time of flight allows estimating the distance of the objects.

Direct Time-of-Flight (dToF) sensor devices estimate the distance of objects by measuring the time of flight between the emission of the pulsed optical signal and the detection of the reflected optical signal.

Indirect Time-of-Flight (iToF) sensor devices estimate the distance of objects based on the phase shift between the emitted optical signal, which is modulated in amplitude, and the reflected optical signal.

The photodetector of the image sensor, configured to detect the reflected optical signal, can be an array of Single Photon Avalanche Diodes (SPAD). Each detected photon triggers an avalanche current, signalling an event, i.e., the detection of a photon.

The image sensor can then generate a histogram of the number of events per time interval (bins). This histogram represents the distribution of photons as a function of their time of flight.

The image sensor may include a processing unit configured to identify the temporal peak corresponding to the predominant time of flight of the photons, thereby determining the distance of the object.

In this regard, document US 11,971,505 B2 illustrates an example of an image sensor configured to provide a depth map of the scene. It describes a method for determining a temporal peak with greater accuracy and fewer computational resources.

To achieve this, an iterative and adaptive approach is proposed. Multiple optical pulses are emitted toward the scene and then detected within a detection time window. After each pulse detection, a temporal peak is identified in the corresponding histogram, allowing the adjustment of the subsequent detection time window. The duration of this time window is gradually reduced, as is the duration of the associated optical pulse. Thus, in the final iteration, the detection time window is particularly narrow and centred on the position of the predominant temporal peak, enabling precise estimation of the distance of the object.

However, as indicated in document EP 4 063 899 A1, flicker noise may be present when estimating the distance of the object. This results in significant random variations in the estimated distance of a stationary object.

Flicker noise can have different causes. It may occur when the object is near the detection threshold, for example, when the object is far from the image sensor or has low reflectance. It can also appear when multiple objects at different distances are within the field of view of the image sensor or the detection pixel, causing the estimation algorithm to "hesitate" between different distances.

However, in addition to flicker noise, the estimated distance signal may also contain Gaussian noise, as with any time signal, which should also be filtered.

Thus, there is a need for a time signal filtering method configured to reduce noise, whether it is Gaussian noise or flicker noise.

### SUMMARY

Some embodiments relate to filtering a time signal by temporal noise reduction, i.e. by reduction of both Gaussian noise and flicker noise.

According to an aspect, it is proposed a filtering method for processing a time signal. This filtering method is designed for reducing both Gaussian noise and flicker noise, and is also designed for ToF sensor capable of generating a depth data map.

The value of the time signal at each instant k comprises at least one data map, each being associated with a physical parameter. Each data map may be of dimensions N×M, with N≥1 and M≥1.

Furthermore, for each physical parameter, J candidate variables are provided, with J≥2, each candidate variable being associated with an occurrence score and with a confidence interval.

Each confidence interval may be a confidence interval of a Gaussian dispersion defined by a standard deviation and centred on a value of the corresponding candidate variable.

The method comprises the following steps:
o receiving a current value of the time signal, at the current instant k, output from a sensor device;
o determining a current value of each confidence interval at the current instant k;
o selecting a candidate variable when the current value of the time signal is included in the current value of the corresponding confidence interval;
o updating the current value of the occurrence scores, based on the selection step;
o when the current value of the time signal is only included in the current value of the confidence interval associated with the selected candidate variable, then determining a current value of the selected candidate variable by averaging its precedent value at the preceding instant k-1 with the current value of the time signal;
o providing a filtered value of the time signal at the current instant k, as being equal to the current value of the candidate variable having the highest occurrence score.

This filtering method may be a computer implemented method. The computer may comprise a processing unit, such as a processor or microprocessor, configured to execute the filtering method according to any of the embodiments, and at least a memory configured to store the values of the candidate variables and those of the occurrence scores.

In some embodiments, the filtering method comprises, when the current value of the time signal is only included in the current value of the confidence interval associated with the selected candidate variable:
o incrementing the current value of the occurrence score associated with the selected candidate variable, and decrementing the current value of an occurrence score of the unselected candidate variable;
o remaining unchanged the current value of the unselected candidate variable.

In some embodiments, the filtering method comprises, when the current value of the time signal is only included in the current value of the confidence interval associated with the selected candidate variable: incrementing a current value of a streak counter associated with the selected candidate variable; and remaining unchanged the current value of each streak counter associated with the unselected candidate variables.

In some embodiments, updating a current value of the selected candidate variable comprises calculate a weighted average of its precedent value at the preceding instant k-1 with the current value of the time signal, the current value of the time signal being weighted by a parameter (α_{(n,m)}(k,p)) equal to the inverse of the corresponding streak counter and the precedent value being weighted by one minus this parameter (1 - α_{(n,m)}(k,p)).

In some embodiments, the filtering method comprises, if the current value of the time signal is not included in any of said confidence intervals:
o setting to one the current value of an occurrence score of the candidate variable with the lowest occurrence score; and decrementing the current value of the occurrence score of each candidate variable different from the candidate variable ${V}_{\left(n, m\right)}^{\left(jlS\right)} \left(p\right)$ with the lowest occurrence score;
o storing the current value of the time signal in the current value of candidate variable with the lowest occurrence score, and remaining unchanged the current value of each candidate variable different from the candidate variable with the lowest occurrence score.

In some embodiments, the filtering method comprises, if the current value of the time signal is not included in any of said confidence intervals: setting to one the current value of a streak counter associated with the candidate variable with the lowest occurrence score; and remaining unchanged the current value of each streak counter associated with the other candidate variables.

In some embodiments, the filtering method comprises, if the current value of the time signal is included in J' confidence intervals, with 1<J'≤J, of said confidence intervals, the step of selecting all the J' corresponding candidate variables, where:
o for a first selected candidate variable:
   - determining its the current value as being equal to weighted mean of the selected candidate variables weighted by their corresponding streak counters;
   - determining the current value of the corresponding occurrence score as being equal to the sum of the selected occurrence scores at the precedent instant k-1, plus one; and
   - determining the current value of the corresponding streak counter score as being equal to the sum of the selected streak counters at the precedent instant k-1, plus one;
o for the selected candidate variables other than the first selected one:
   - removing the current value;
   - setting to zero the current value of the corresponding occurrence scores and the current value of the corresponding streak counters;
o for the unselected candidate variables:
   - remaining unchanged the current value of the candidate variables;
   - decrementing the current value of the corresponding occurrence scores; and remaining unchanged the current value of the corresponding streak counters.

In some embodiments, the filtering method comprises, when the current instant k is the initial instant k=0:
o setting:
   - a current value of a first occurrence score and, if applicable, a current value of a first streak counter associated with a first candidate variable, to one; and
   - a current value of occurrence score and, if applicable, a current value of streak counter associated with any other candidate variables, to zero;
o updating by:
   - setting a current value of the first candidate variable to the current value of the time signal;
   - leaving a current value of any other candidate variables unchanged.

In some embodiments, the current value of the time signal is a matrix of dimensions N×M, with N>1 and/or M>1, and the steps of the filtered method are executed, at the current instant k, for each element of rank n,m of the current matrix, with n going from 1 to N and m going from 1 to M.

In some embodiments, the filtering method comprises:
o identifying (220) a movement of a target in the current value of the time signal, this step being executed before the step of determining (230) confidence intervals;
o if a movement is identified:
   - setting to one a current value of the first occurrence score of a first candidate variable; and, if applicable, setting to one a current value of a first streak counter of the first candidate variable; and setting to zero a current value of the occurrence score of the other candidate variables; and, if applicable, setting to zero a current value of the first streak counter of the other candidate variables;
   - setting a current value of the first candidate variable to the current value of the time signal; and removing the current value of the other candidate variables.

In some embodiments, the current value of the time signal comprises P+1 data maps, with P>0, and wherein the steps of the filtered method are executed, at the current instant k, for each data maps with p going from 0 to P.

In some embodiments, in the step of selecting a candidate variable, a candidate variable is selected when the current value of the time signal is included in the current value of the corresponding confidence interval for at least two or all the data maps.

In some embodiments, the filtering method comprises: determining a confidence indicator, based on a signal on noise ratio associated with the filtered current value of the time signal, and a noise reduction factor associated with the filtered current value of the time signal, and based on a number of values being temporal averaged associated with the value of the time signal.

According to another aspect, it is proposed a filtering device configured to process a time signal, comprising: a processing unit configured to execute the filtering method according to any of the embodiments.

According to another aspect, it is proposed a system comprising: a sensor device, configured to output a current value of a time signal, at successive instants; and the filtering device according to any of the embodiments, coupled to the sensor device for receiving the current value of the time signal at the current instant k, and configured to provide a filtered value of the time signal.

In some embodiments, the sensor device is an optical sensor device outputting an image of a scene at successive instants, said successive images being the time signal.

In some embodiments, the system comprises an optical source configured to emit an optical signal toward a scene, wherein said sensor device is configured to detect a reflected optical signal by the scene and to estimate a depth of the scene.

In some embodiments, the sensor device is a ToF device.

In some embodiments, the system comprises a screen configured to display the filtered time signal or a parameter based on the filtered time signal.

According to another aspect, it is proposed a non-transitory computer-readable storage medium (program product) storing instructions of a computer program for implementing a filtering method according to any of the embodiments.

In some embodiments, the filtering device is implemented inside the sensor device, or may be an external unit.

In some embodiments, the sensor device comprises a detector sensor, for instance a detector array sensor.

In some embodiments, the detector sensor is a single photo avalanche diode array sensor.

In some embodiments, the system is or comprises a computer such as a desktop or laptop computer; a mobile device such as a mobile phone, a tablet; a smartwatch; a virtual reality headset or an augmented reality headset; a smart television; a camera system; a robot (vacuum cleaner, a drone, an industrial robot...); a vehicle such as an autonomous and assisted vehicle; or a medical device; etc.

### BRIEF DESCRIPTION OF THE DRAWINGS

Some embodiments will now be described, by way of example only, and with reference to the accompanying Figures, wherein:
Figure 1A shows an example of a time signal of a physical parameter, where the time signal is affected by Gaussian noise and flicker noise;
Figure 1B shows a histogram representation of the time signal of Figure 1A;
Figure 2 illustrates a filtering device according to some embodiments, configured to process a scalar time signal;
Figure 3 illustrates a flow diagram of some steps of a filtering method of Figure 2, when the current instant is the initial instant;
Figure 4A shows a comparison between a time signal received by a filtering method according to some embodiments, and the filtered time signal as output by the filtering method;
Figure 4B shows the evolution of the occurrence scores of the first and second candidate variables calculated by the filtering method used in Figure 4A;
Figure 5 illustrates a filtering device according to some embodiments, configured to process a matrix time signal;
Figure 6 illustrates a flow diagram of some steps of a filtering method of Figure 5, when the current instant is the initial instant;
Figure 7A illustrates a flow diagram of some steps of a filtering method of Figure 5, adapted to identify a movement in the current value of the time signal;
Figure 7B illustrates a flow diagram of some steps of a filtering method of Figure 5, when a movement has been identified in the current value of the time signal;
Figure 8A shows an example of a time signal affected by flicker noise;
Figure 8B shows the evolution of a confidence value associated with a filtered current value of the time signal of Figure 8A, when processed by a conventional filtering device and when processed by a filtering device according to some embodiments;
Figure 9A shows an evolution of a temporal standard deviation of a depth map, when processed and not processed by a filtering device according to some embodiments;
Figure 9B shows an evolution of the rate of valid pixels from a depth map output by a depth map sensor, when the depth map is processed and not processed by a filtering device according to some embodiments.

### DETAILED DESCRIPTION

In the figures and in the remainder of the description, the same reference signs represent identical or similar elements. In addition, the various elements are not shown to scale in such a way as to give preference to the clarity of the figures. Moreover, the various embodiments and variants are not exclusive of one another and may be combined.

Unless otherwise specified, the terms "substantially", "approximately", "in the order of" mean to the nearest 10%, preferably to the nearest 5%. Moreover, the terms "between ... and ... " and equivalent mean that the ranges are included, unless otherwise specified.

### Definition of the time signal X

As mentioned earlier, a discrete time signal X of at least one physical parameter or quantity X(p) is measured by a sensor device. The sensor device can be any type of sensor, for example an optical range sensor (dToF, IToF, Lidar...), a pressure sensor, a temperature sensor, a speed sensor, an accelerometer, a magnetometer, a MEMS or NEMS sensor, or other...

The time signal X corresponds to a sequence of values X(k) of at least one physical parameter X(p) estimated by the sensor device at successive instants k, at a sampling frequency fe.

Each value X(k) of the time signal X provided at the instant k by the sensor device comprises a set {x(k, p)}_{0≤p≤P} of at least one data map x(k,p), each data map (also called image) being associated with a specific physical parameter X(p).

The data maps {x(k, p)}_{0≤p≤P} are indexed by the index p which takes values from 0 to P. So the number of available physical parameters is P+1.

The main physical parameter is noted X(p=0), and possible additional physical parameters are X(p>0) with p going from 1 to P. For instance, in case of a ToF depth sensor device, the depth is the main physical parameter X(0) and its depth map is x(k,0); while the intensity map x(k,1) of the reflected optical signal corresponds to an additional physical parameter X(1), and the intensity map x(k,2) of the ambient light corresponds to another additional physical parameter X(2). The value of P is here equal to 2.

Depending on the capabilities of the sensor device, the value of P may therefore vary. In a simplified case, the sensor device provides only the depth map x(k,0), so P=0. In other configurations, the sensor device may simultaneously deliver multiple data maps, so P>0.

Each data map x(k,p) provided by the sensor device typically takes the form of an N×M matrix, where N and M represent the number of rows and columns of the data map, defining the spatial resolution of the measurements. The data map can be noted {x_{(n,m)}(k,p)}_{1≤n≤N,1≤m≤M}. When N and M are equal to 1, the data map corresponds to a single scalar. We therefore understand that the time signal X can be a scalar (or linear) signal, or a matrix signal.

To summarize, we note:
o X the time signal,
o X(k) the value of the time signal X at the instant k, formed of at least one data map {x(k,0)}_{0≤p≤P}, with X(k)=x(k,0) when P=0, and **X**(k)={x(k,p)}_{0≤p≤P} when P>0,
o Xf(k) the filtered value of the time signal X, provided by the filtering method and device according to some embodiments.

In the description, for more conciseness, {x_{(n,m)}(k,p)}_{1≤n≤N,1≤m≤M} will be noted {x_{(n,m)}(k,p)}_{n,m}. The same applies to the other variables and parameters.

### Introduction of the noise issue

The time signal **X** can exhibit Gaussian noise, but sometimes also flicker noise (also known as impulsive noise). Let's consider here the time signal **X** associated with the physical parameter X(0) with P=0: the value **X**(k) corresponds to the data map x(k,0), here a scalar (M=N=1). Gaussian noise g(k) is characterized by a normal (Gaussian) distribution with zero mean µg=0 and non-zero standard deviation σg. So, in the case where the signal has a constant effective value x_{eff}, and without considering flicker noise, we can write: x(k,0) = x_{eff} + g(k). Furthermore, we can define a three-sigma confidence interval: I_{3σg} = [x_{eff} - 3'σg; x_{eff} + 3'σg], which contains 99.7% of the estimated values x(k,0) of the physical parameter X(0).

Flicker noise, on the other hand, results in significant random variation in the measured value of the physical parameter. In other words, if flicker noise has a mean value x₂, it is generally outside the confidence interval I_{3σg}.

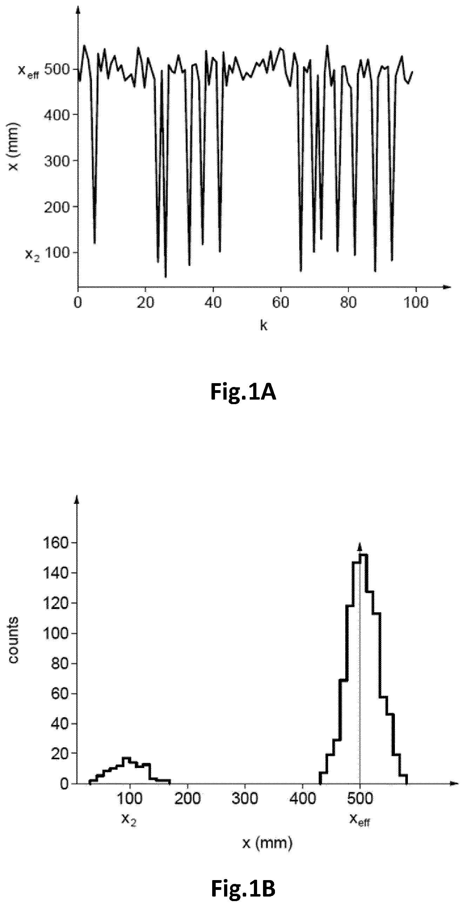

Figure 1A illustrates an example of a time signal **X** with **X**(k)=x(k,0) of an object's distance X(0) estimated at a frame rate by a ToF-type image sensor, such as a dToF or iToF sensor. Figure 1B illustrates a histogram representation of the time signal **X** shown in Figure 1A, where the estimated distance x(k,0) is on the x-axis and the number of occurrences is on the y-axis.

This time signal **X** can be estimated by the image sensor for one of its detection pixels. In this example, the object is stationary and is distant from the image sensor by a constant effective distance x_{eff} of 500mm.

The time signal **X** is affected by Gaussian noise centred on the effective value x_{eff}, but also by flicker noise. Indeed, as shown in Figure 1B, the majority of time signal values x(k,0) lie between 450 and 550mm around the effective value x_{eff} (Gaussian noise), while a few values x(k,0) lie between 50 and 150mm around the value x₂ here equal to 100mm (flicker noise).

In this example, the time signal **X** thus has two mean values: a first mean value which is substantially equal to the actual value x_{eff}(to be identified), affected by Gaussian noise of standard deviation σg1; and a second mean value x₂ related to flicker noise, also affected by Gaussian noise of standard deviation of2. Note that it is possible for the confidence intervals I_{3σg1} and I_{3σf2} associated with two mean values x_{eff} and x₂ to overlap.

Determining the effective value x_{eff} in such a time signal **X** is made particularly difficult by the fact that Gaussian noise reduction and flicker noise reduction do not usually involve the same filtering approaches.

Furthermore, such approaches may require several successive values of the time signal **X** to be stored in memory, which then requires significant computing resources. This is particularly the case when the signal **X** is a matrix time signal (for instance, a scene depth sensor).

On the other hand, in the case of a matrix sensor device, a sharp variation in the time signal **X** from one instant to the next may be due to movement of the target object, but also to flicker noise. There is therefore a need, in this case, to be able to discriminate such a temporal variation as belonging to object movement or flicker noise.

To achieve this, the inventors have developed a filtering method and device that reduces not only the Gaussian noise centred on the effective value to be determined, but also the flicker noise, all with reduced computing resources. This filtering method is designed to ToF sensor capable of generating a depth data map but is not limited to this type of sensor, as mentioned before.

Furthermore, filtering can be performed in real time, i.e. it can be applied to each signal value (scalar or matrix) as it is acquired. This reduces noise while maintaining fast device response.

Finally, in the case of a matrix time signal, the filtering method can determine whether a variation in the time signal between two successive instants is due to the movement of an object or to flicker noise.

### Case of a scalar time signal X

First, we consider the case of a scalar time signal **X** output from a sensor device at the sampling frequency. Each data map of **X**(k) is a scalar, meaning that N=M=1. In consequence, the data map {x_{(n,m)}(k,p)}_{n,m} is noted x(k,p).

One embodiment relates to a filtering device and to a filtering method executed by the device, configured to receive as input the current value **X**(k)=x(k,0) of the time signal **X** at the current instant k, and to provide as output a filtered value **X**f(k)=xf(k,0) of the time signal **X,** where Gaussian noise and flicker noise have been reduced.

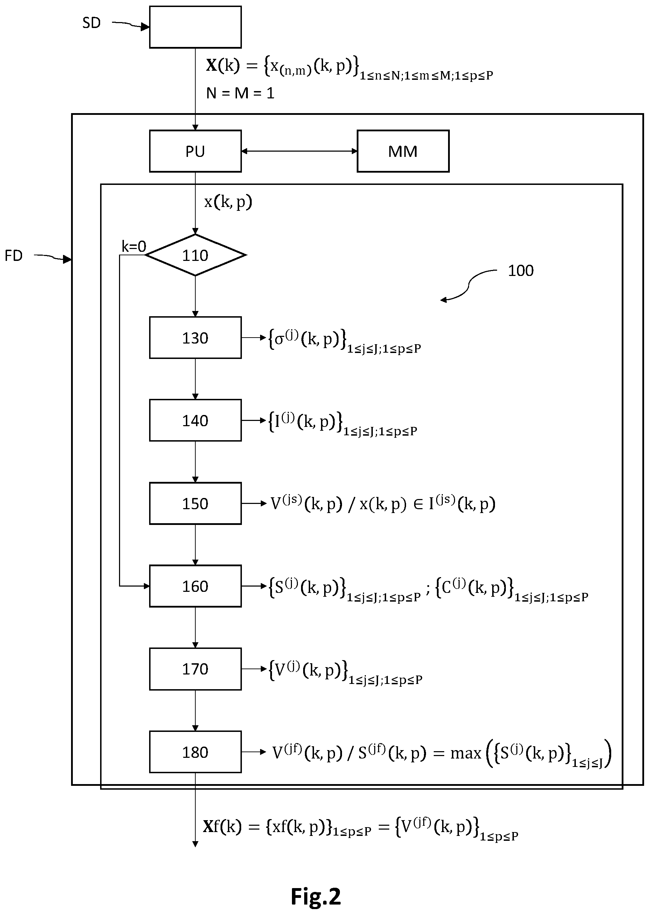

Figure 2 illustrates such a filtering device FD configured to implement a filtering method adapted to reduce the noise that may be present in a scalar time signal **X.**

The filtering device FD is coupled to a sensor device SD configured to measure and estimate the value of a physical parameter X(0) at a sampling frequency. The sensor device SD and the filtering device FD can together form a sensor system.

The sensor device SD can be an optical sensor, such as a depth sensor, but also a sensor configured to measure temperature, force, pressure, position, or speed, etc. It is a scalar sensor which provides a succession of values of the physical parameter X(0) at different successive instants k, at a sampling frequency, the succession of values forming the time signal **X.**

For example, in the case of an optical range sensor, the physical parameter X(0) may be a distance to the sensor of an object located in a scene, or even an intensity or amplitude of a detected optical signal or of the ambient light. The sensor may be configured to provide values of all these physical parameters.

The sensor device may comprise a transducer adapted to detect an input variable (measurand) and to provide in response an electrical signal of an intermediate variable (intensity of an electrical voltage or current, quantity of electrical charges, etc.). It may also include a processing module, coupled to the transducer, adapted to provide the estimated value of the physical parameter.

The filtering device FD is configured to implement a method of filtering, by temporal noise reduction, the time signal **X** output from the sensor device SD.

It comprises a computer-like element consisting of a processing unit PU (processor or microprocessor) and a memory area MM. Several computer programs or several functions of the same computer program can be stored in the memory area MM. This computer program or these computer programs comprise instructions designed to be executed by the processing unit PU in order to realize the functions of software modules.

The filtering device FD is coupled to the sensor device SD for receiving the time signal **X.** This connection can be of various types, for example wired or wireless. The processing device can be integrated in the same housing as the sensor device SD, and can be implemented in a common integrated circuit. Alternatively, the filtering device can be external to the sensor device, and can be located remotely from this sensor.

As detailed below, one aspect of the filtering method is based, for each physical parameter X(p), on the use of candidate variables ${\left\{{V}_{\left(n, m\right)}^{\left(j\right)}\left(k, p\right)\right\}}_{1 \leq j \leq J} ,$, each candidate variable being associated with an occurrence score ${S}_{\left(n, m\right)}^{\left(j\right)} \left(k, p\right)$. In other words, for each element (n,m) of the data map, and for each value p of the physical parameter, there are J candidate variables ${V}_{\left(n, m\right)}^{\left(j\right)} \left(k, p\right)$, with j going from 1 to J, J≥2.

Candidate variables {V^{(j)}(k,p)}_{j,p}, where the value of J is greater or equal to 2, are used to store the value **X**(k) of the time signal **X** at the current instant k, possibly averaged with the value previously stored when the candidate variable was selected. We then understand that J candidate variables {V^{(j)}(k,p)}ⱼ are associated with each physical parameter X(p). In other words, if we consider P=2 and J=2, the main physical parameter *X*(0) has two candidate variables V⁽¹⁾(k,0) and V⁽²⁾(k,0), the first additional parameter *X*(1) has also two candidate variables V⁽¹⁾(k,1) and V⁽²⁾(k,1), and the second additional parameter *X*(2) has also two candidate variables V⁽¹⁾(k,2) and V⁽²⁾(k,2).

Each candidate variable V^{(j)}(k,p) has an associated occurrence score S^{(j)}(k,p). The occurrence score S^{(j)}(k,p) is updated (incremented) when its candidate variable V^{(j)}(k,p) has been selected, i.e. when the value x(k,p) of the physical parameter *X*(p) at the current instant k is close to a candidate variable V^{(j)}(k,p). As explained in detail below, by "close to", we mean that the current value x(k,p) belongs to the confidence interval I^{(j)}(k,p) associated with the candidate variable V^{(j)}(k,p).

We note V^{(js)}(k,p) the selected candidate variable associated with the physical parameter *X*(p) among all the candidate variables {V^{(j)}(k,p)}_{1≤j≤J} associated with said physical parameter *X*(p). The corresponding occurrence score is noted S^{(js)}(k,p). A candidate variable V^{(j)}(k,p) is selected when the current value x(k,p) belongs to the corresponding confidence interval I^{(j)}(k,p). The confidence intervals {I^{(j)}(k,p)}_{1≤j≤J} are representative of a Gaussian dispersion of predefined standard deviation centred on the value of a candidate variable V^{(j)}(k,p).

Finally, in some embodiments, each candidate variable V^{(j)}(k,p) may have an associated streak counter C^{(j)}(k,p) (sequence counter). This is used when temporal averaging, carried out when updating the candidate variable, uses a dynamic α^{(j)}(k,p) weight, which may then depend on the value of the streak counter. As detailed below, this streak counter represents the number of temporal averaging with regard to the candidate variable.

The values of candidate variables V^{(j)}(k,p), occurrence scores S^{(j)}(k,p) and streak counters C^{(j)}(k,p) are stored in memory MM, while the values of previous instants are not stored.

There may be as many candidate variables as there are distinct average values in the time signal (for example, the effective value x_{eff} to be determined, and one or more main values related to flicker noise). So, the integer J may be equal to 2, 3, 4 or more.

In the example shown in Fig. 2, two distinct mean values are present (as in Figs. 1A and 1B). In consequence, while J may be greater than 2, the two candidate variables V⁽¹⁾(k,p) and V⁽²⁾(k,p) will automatically be used in the filtering method.

Furthermore, at each step, the filtering method processes the value x(k,p) of each physical parameter X(p): x(k,0), x(k,1), x(k,2), etc.

Step 110 of receiving a current value **X**(k) of the time signal **X.** The filtering device receives the value X(k) at current instant k of at least one physical parameter X(p) estimated by the sensor device. In this example, where the sensor is linear, a single scalar value is received at the current instant k: X(k) = x(k,p). The processing unit PU determines whether the current instant k corresponds to the initial instant (k = 0) or not (k > 0).

If the current instant k is the initial instant (k=0), the filtering method continues with steps 150 and 160, otherwise (k>0), the filtering method continues with step 130.

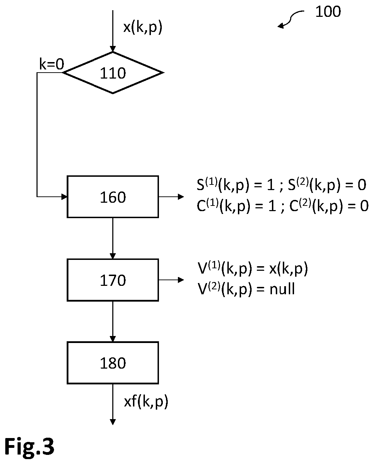

### A/ Let's consider the case where k=0, with reference to Figure 3, which illustrates steps of the filtering method shown in Figure 2.

Step 160 of updating occurrence scores {S^{(j)}(k,p)}_{j,p}. The processing unit PU determines the current value S^{(j)}(k,p) of each occurrence scores, and, where applicable, the current value C^{(j)}(k,p) of each streak counters.

Here, the occurrence score S⁽¹⁾(k,p) associated with the candidate variable V⁽¹⁾(k,p) is incremented by a predefined value from its initial zero value, for example by one unit +1: S⁽¹⁾(k,p)=+1, while the occurrence score S⁽²⁾(k,p) associated with the candidate variable V⁽²⁾(p) remains at zero: S⁽²⁾(k,p)=0. Similarly, the streak counter C⁽¹⁾(k,p) associated with the candidate variable V⁽¹⁾(k,p) is incremented by one unit +1 from its initial zero value: C⁽¹⁾(k,p)=+1, while the streak counter C⁽²⁾(k,p) associated with the candidate variable V⁽²⁾(k,p) remains at zero: C⁽²⁾(k,p)=0. Note that a value of C^{(j)}(k,p)=1 means that only one data value has been used to compute the mean (so, no averaging).

Step 170 of updating candidate variables {V^{(j)}(k, p)}_{j,p}. The processing unit PU determines the current value V^{(j)}(k,p) of each candidate variables.

Here, the value x(k=0,p) is stored in the first candidate variable V⁽¹⁾(p): V⁽¹⁾(k,p) = x(k=0,p). The value V⁽²⁾(k,p) of the candidate variable V⁽²⁾(p) remains unchanged and can have an empty value, zero or no value, or any value at all. Of course, another candidate variable than V⁽¹⁾ could be chosen to store the current value x(k) at the initial instant.

Steps 160 and 170 can be performed successively (150 then 160, or vice versa) or simultaneously.

Step 180 of providing the filterer value **X**f(k) time signal **X.** The processing unit PU provides the current value V⁽¹⁾(k,p) of the first candidate variable as the output value **X**f(k) of the filtered time signal **X:** xf(k=0,p) = V⁽¹⁾(k = 0, p).

### B/ Let's now consider the case where k>0, with reference to figure 2.

Step 130 of determining the standard deviations {σ^{(j)}(k,p)}_{j,p}. The processing unit PU determines the current value σ^{(j)}(k, p) of each standard deviation, for each candidate variable (so for each value of the index j) and each physical parameter (so for each value of the index p).

In this embodiment, the standard deviations are predefined and their current values σ^{(j)}(k, p) are constant over time.

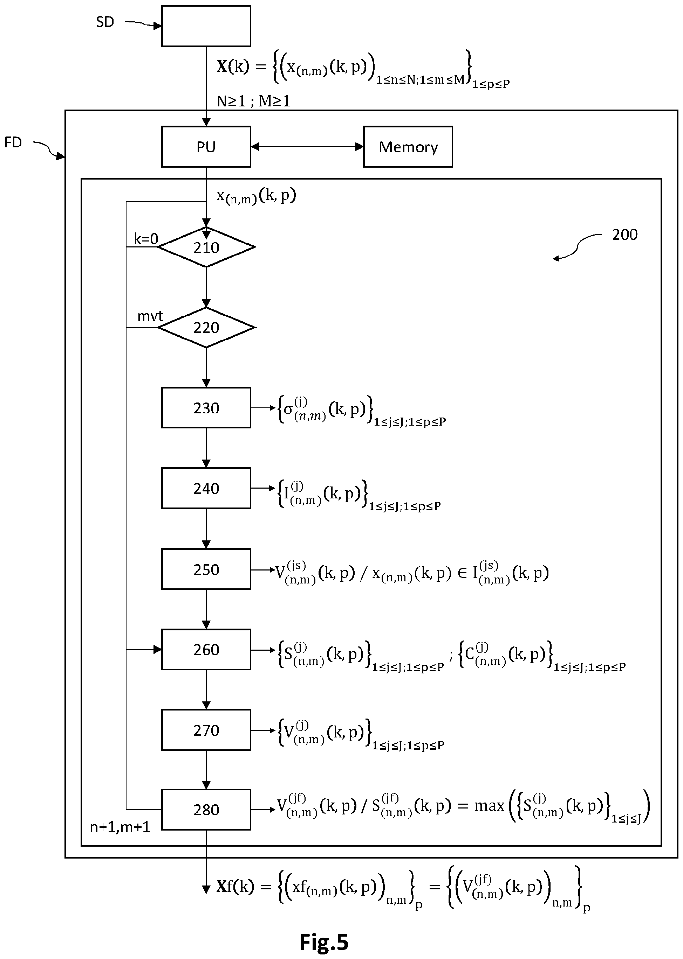

Alternatively, as described in detail below with reference to Figure 5, the current value σ^{(j)}(k, p) of each standard deviation can be determined in step 130. In this case, the new value σ^{(j)}(k, p) is computed on the fly and may not be stored in memory MM.

Step 140 of determining the confidence intervals {I^{(j)}(k, p)}_{j,p}. The processing unit PU determines the current value I^{(j)}(k, p) of each confidence interval, for each candidate variable and for each physical parameter.

Each confidence interval I^{(j)}(p) is representative of a Gaussian dispersion of predefined standard deviation σ^{(j)}(p) centred on the stored value V^{(j)}(p) of the candidate variable.

The current value I^{(j)}(k, p) of each confidence interval depends on the current value σ^{(j)}(k, p) of the standard deviation and on the stored value V^{(j)}(k - 1, p) of the candidate variable. Indeed, at this step, the current value σ^{(j)}(k, p) of each standard deviation has been determined (updated or not) at the instant k, while the value of each candidate variable has not yet been updated and corresponds to the stored value V^{(j)}(k - 1, p) determined at the previous instant k-1.

Confidence intervals are defined at a chosen confidence level, for example at least 95% or even 99%. In this example, the current value I^{(j)}(k, p) is defined at the 99.7% confidence level: I^{(j)}(k, p) = [V^{(j)}(k - 1, p) - 3 × σ^{(j)}(k, p); V^{(j)}(k - 1, p) + 3 × σ^{(j)}(k, p)].

Step 150 of selecting a candidate variable V^{(js)} (p). The processing unit PU determines whether the current value x(k,p) of the time signal is close to the value V^{(j)}(k - 1, p) of one and/or other of the candidate variables, i.e. whether it lies within one and/or other of the confidence intervals I^{(j)}(k, p). In other words, the processing unit PU determines whether: ∀j, x(k, p) ∈ I^{(j)}(k, p).

Depending on the result, the selected candidate variable V^{(js)}(p) is then identified, along with its corresponding occurrence score S^{(js)}(p) and, where applicable, its corresponding occurrence counter C^{(js)}(p).

B1/ We consider the case where the signal x(k,p) lies within a single confidence interval, e.g. interval I⁽¹⁾(k, p): x(k, p) ∈ I⁽¹⁾(k, p) and x(k, p) ∉ I⁽²⁾(k, p). In consequence, the processing unit PU selects the candidate variable V⁽¹⁾(p) and not the candidate variable V⁽²⁾(p). Consequently, the selected candidate variable V^{(js)}(p) is V⁽¹⁾(p).

Note that, in some embodiments where several physical parameters X(p) with P>0 are considered, the selected candidate variable is the same for some or all the physical parameters. In other words, to select V⁽¹⁾(p), the condition x(k, p) E I^{(js)}(k, p) may need to be satisfied for a subset of at least two physical parameters among the J physical parameters, or for all the J physical parameters.

Step 160 of updating occurrence scores {S^{(j)}(k, p)}_{j,p}. The processing unit PU determines the current value S^{(j)}(k, p) of each occurrence score, and, where applicable, the current value C^{(j)}(k, p) of each streak counter, depending on the result of step 150. More precisely, the current value S^{(js)}(k, p) of the selected occurrence score is incremented, while the current value S^{(j≠js)}(k, p) of the unselected occurrence score is not incremented.

In one embodiment, the processing unit PU increments the current value S^{(js)}(k, p) of the selected occurrence score (here S⁽¹⁾(p)), for example by one unit: S^{(js)}(k, p) = S⁽¹⁾(k, p) = S⁽¹⁾(k - 1, p) + 1. The updated value S⁽¹⁾(k, p) of the occurrence score at instant k is stored in memory MM, replacing the previously stored value S⁽¹⁾(k - 1, p).

Here, the value S⁽²⁾(k, p) of the unselected occurrence score S⁽²⁾(p)) is decremented. The value of the decrement may be equal to the increment, in absolute value. In this example, S⁽²⁾(k, p) = S⁽²⁾(k - 1, p) - 1, and the new value S⁽²⁾(k, p) is stored in the memory MM and thus replaces the previous value S⁽²⁾(k - 1, p). Alternatively, the value S⁽²⁾(k, p) of the unselected occurrence score could remain unchanged.

Step 170 of updating candidate variables {V^{(j)}(k, p)}_{j,p}. The processing unit PU determines the current value V^{(j)}(k, p) of each candidate variable. More precisely, the value V^{(js)}(k, p) of the selected candidate variable is updated by temporal averaging of its stored value V^{(js)}(k-1,p) with the current value x(k,p), while the value of each unselected candidate variable is not updated in this way.

This step 170 can be performed before, after or in parallel with step 160.

Here, since V⁽¹⁾(p) is the selected candidate variable , its value V⁽¹⁾(k, p) is determined by temporal averaging of its stored value V⁽¹⁾(k - 1, p) with the current value x(k): V⁽¹⁾(k, p) = 〈V⁽¹⁾(k - 1, p)|x(k, p)), where <...|...> is an averaging operator. Then the new value V⁽¹⁾(k, p) is stored in memory MM replacing the previous value V⁽¹⁾(k - 1, p). On the other hand, the value V⁽²⁾(k, p) of the unselected candidate variable remains unchanged.

The updated value V^{(js)} (k, p) of the selected candidate variable can be determined in various ways. For example, it can be calculated by arithmetic mean, by harmonic mean or by the root mean square, among others.

The average, here by arithmetic mean, can optionally be weighted by a weight α^{(js)}(k, p): V^{(js)}(k, p) = α^{(js)}(k, p) × x(k, p) + (1 - α^{(js)}(k, p)) × V^{(js)}(k - 1, p). The weight α^{(js)}(p) can have a predefined fixed value, or a dynamic value that is modified at each instant k. The value α^{(js)}(k, p) of the weight can thus be equal to α^{(js)}(k, p) = 1/C^{(js)}(k p), where C^{(js)}(k, p) is the value of the selected streak counter.

In a general manner, the streak counter value C^{(j)}(k, p) increases by +1 each time a new temporal averaging step is performed for the candidate variable in question.

This embodiment can be summarized in the following table.

| x(k, p) ∈ I⁽¹⁾(k, p) ∉ I⁽²⁾(k, p) | Selected candidate variable v^{(js)}(p), here V⁽¹⁾(p) | Unselected candidate variable V^{(j≠js)}(p), here V⁽²⁾(p) |
|---|---|---|
| Step 160 | S⁽¹⁾(k, p) = S⁽¹⁾(k - 1, p) + 1 | S⁽²⁾(k, p) = S⁽²⁾(k-1, p) - 1 |
| | C⁽¹⁾(k, p) = C⁽¹⁾(k - 1, p) + 1 | C⁽²⁾(k, p) = C⁽²⁾(k - 1, p) |
| Step 170 | V⁽¹⁾(k, p) = α⁽¹⁾(k, p) × x(k, p) + (1 - α⁽¹⁾(k, p)) × V⁽¹⁾(k - 1, p) | V⁽²⁾(k, p) = V⁽²⁾(k - 1, p) |

Step 180 of providing the filtered current value Xf(k) of the time signal. The processing unit PU determines the output value xf(k,p) of the time signal, i.e. the filtered (denoised) value. For this purpose, the output value xf(k,p) corresponds to the value V^{(jf)}(k, p) of the candidate variable V^{(jf)}(p) with the highest occurrence score S^{(jf)}(k, p): ${S}^{\left(jf\right)} \left(k, p\right) = {max}_{j} \left({S}^{\left(j\right)}\left(k, p\right)\right)$. The filtered value Xf(k) is provided by the filtering device FD, where **X**f(k) = {xf(k, p)}ₚ = {V^{(jf)}(k, p)}p.

Such a filtering method makes it possible to reduce the temporal noise of a time signal which would be affected by both Gaussian noise and flicker noise. Indeed, by defining several candidate variables ${\left\{{V}_{\left(n, m\right)}^{\left(j\right)}\left(p\right)\right\}}_{j}$, updating the value V^{(js)} (k, p) the selected candidate variable by implementing a temporal averaging of the current value x(k,p) with the value at the previous instant V^{(js)}(k - 1, p), updating the value S^{(js)}(k, p) of the corresponding occurrence score, and finally selecting the majority candidate variable V^{(jf)}(p) (having the highest occurrence score S^{(jf)}(k, p)), it appears that both Gaussian noise and flicker noise are reduced. As a result, the effective value x_{eff} of the time signal is more accurately estimated.

In addition, computer resources are reduced, since the values stored in the memory MM are the values of candidate variables, occurrence scores and, where applicable, streak counters, which replace the previously stored values. Updated values from previous instants are advantageously not kept in memory. Furthermore, if the selected candidate variable is the same for all the physical parameters, then the occurrence score and the streak counter can be the same for all the physical parameters. This means that fewer data maps need to be stored in the memory.

B2/ According to one embodiment, the current signal value x(k,p) may not belong to any confidence interval I^{(j)}(k, p).

In our example, it means that: x(k,p) ∉ I⁽¹⁾(k, p) and x(k,p) ∉ I⁽²⁾(k, p). In other words, the current value x(k,p) is not close to the current value of either of the two candidate variables V⁽¹⁾(p) and V⁽²⁾(p).

Step 150 of selecting a candidate variable V^{(js)}(k - 1, p). The processing unit PU therefore selects none of the candidate variables.

Step 160 of updating occurrence scores {S^{(j)}(k, p)}_{j,p}. The processing unit PU decrements by one unit the value S^{(j≠jlS)}(k, p) of the occurrence scores S^{(j≠jlS)}(p) associated with the candidate variables V^{(j≠jlS)}(p) other than the minority candidate variable V^{(jlS)}(p), that is, the one with the lowest occurrence score: S^{(jlS)}(k - 1, p) = ${min}_{j} \left({S}^{\left(j\right)}\left(k-1,p\right)\right)$ : S^{(j≠jlS)}(k, p) = S^{(j≠jlS)}(k - 1, p) - 1. Furthermore, the value C^{(j≠jlS)}(k, p) of the corresponding streak counter C^{(j≠jlS)}(p) remains unchanged: C^{(j≠jlS)}(k, p) = C^{(j≠jlS)}(k - 1, p).

The value S^{(jlS)}(k, p) of the occurrence score S^{(jlS)}(p) associated with the minority candidate variable V^{(jlS)}(p) is set to the value 1: S^{(jlS)}(k, p) = 1. Furthermore, the value C^{(jlS)}(k, p) of the corresponding streak counter C^{(jlS)}(p) is set to 1 (since one data value has been used for averaging).

Step 170 of updating candidate variables {V^{(j)}(k, p)}_{j,p}. The processing unit PU remains unchanged the value V^{(j≠jlS)} (k, p) of the candidate variables V^{(j≠jlS)}(p) other than the minority candidate variable V^{(jlS)}(p). Furthermore, it updates the value V^{(jlS)}(k, p) of the minority candidate variable as being equal to the current signal value x(k,p).

This operation can be described as a soft reset, since only the minority candidate variable V^{(jlS)}(p) is reset, and not all candidate variables V^{(j)}(p). In this case, the soft reset preserves the value V^{(j≠jlS)}(k, p) all other candidate variables V^{(j≠jlS)}(p) than the minority candidate variable V^{(jlS)}(p).

This embodiment can be summarized in the following table in case where there are two candidate variables.

| x(k, p) ∉ I⁽¹⁾(k, p) ∉ I⁽²⁾(k, p) | Candidate variable V^{(j≠jlS)}(p) with highest score | Candidate variable V^{(jlS)} (p) with lowest score |
|---|---|---|
| Step 160 | S^{(j≠jlS)}(k,p) = S^{(j≠jlS)}(k - 1, p) - 1 | S^{(jlS)}(k, p) = 1 |
| | C^{(j≠jlS)}(k, p) = C^{(j≠jlS)}(k - 1, p) | C^{(jlS)}(k, p) = 1 |
| Step 170 | V^{(j≠jlS)} (k, p) = V^{(j≠jlS)} (k - 1, p) | V^{(jlS)} (k, p) = x(k,p) |

In case where more than two candidate variables are used: {V^{(j)}(k, p)}ⱼ with J > 2, then, the situation is the same as above, as explained in the following table.

| ∀j x(k,p) ∉ I^{(j)}(k, p) | All other candidates V^{(j≠jlS)}(p) than the lowest score candidate V^{(jlS)} (p) | Candidate variable V^{(jlS)} (p) with lowest score |
|---|---|---|
| Step 160 | S^{(j≠jlS)}(k, p) = S^{(j≠jlS)}(k - 1, p) - 1 | S^{(jlS)}(k, p) = 1 |
| | C^{(j≠jlS)}(k, p) = C^{(j≠jlS)}(k - 1, p) | C^{(jlS)}(k, p) = 1 |
| Step 170 | V^{(j≠jlS)} (k, p) = V^{(j≠jlS)}(k - 1, p) | V^{(jlS)}(k, p) = x(k, p) |

B3/ According to one embodiment, the current signal value x(k,p) may belong to all confidence intervals I^{(j)}(k, p).

In our example, it means that: x(k, p) E I⁽¹⁾(k, p) and x(k, p) ∈ I⁽²⁾(k, p). In other words, the current value x(k,p) is close to both candidate variables V⁽¹⁾(p) and V⁽²⁾(p).

Step 150 of selecting a candidate variable V^{(js)} (k - 1, p). The processing unit PU therefore selects the two candidate variables V⁽¹⁾(p) and V⁽²⁾(p). The first selected candidate variable V^{(js1)}(p) is V⁽¹⁾(p), while the second selected candidate variable V^{(js2)}(p) is V⁽²⁾(p).

Step 170 of updating candidate variables {V^{(j)}(k, p)}_{j,p}. The processing unit PU updates the value V^{(js1)}(k, p) of the first selected candidate variable as being equal to the mean (here an arithmetic mean) of values V^{(js1)}(k - 1, p) and V^{(js2)}(k - 1, p) weighted by their corresponding streak counter values C^{(js1)}(k - 1, p) and C^{(js2)}(k - 1, p): V^{(js1)}(k) = (V^{(js1)}(k - 1) × C^{(js1)}(k - 1) + V^{(js2)}(k - 1) × C^{(js2)}(k - 1))/(C^{(js1)}(k - 1) + C^{(js2)}(k - 1)), then stores the updated value in the memory MM. In the formula, the index p has been omitted for conciseness.

Furthermore, the value V^{(js2)}(k, p) of the second selected candidate variable V^{(js2)}(p) is reset to an empty or arbitrary value.

Step 160 of updating occurrence scores {S^{(j)}(k, p)}_{j,p}. The processing unit PU updates the value S^{(js1)}(k, p) as being equal to the sum of previously stored values plus one: S^{(js1)}(k, p) = S^{(js1)}(k - 1, p) + S^{(js2)}(k - 1, p) + 1. The value C^{(js1)}(k, p) is set to the sum of previously saved values plus one: C^{(js1)}(k, p) = C^{(js1)}(k - 1, p) + C^{(js2)}(k - 1, p) + 1.

Furthermore, the value S^{(js2)} (k, p) is reset to zero, and the value C^{(js2)} (k, p) is also reset to zero.

This operation can also be described as a soft reset, since only the second selected candidate variable V^{(js2)}(p) is reset, and not all candidate variables V^{(j≠js2)}(p).

This example can be summarized in the table below.

| x(k, p) ∈ I⁽¹⁾(k, p) ∈ I⁽²⁾(k,p) | First selected candidate variable V^{(js1)}(p), here V⁽¹⁾(p). (p is omitted for conciseness) | Second selected candidate variable V^{(js2)}(p), here V⁽²⁾(p) |
|---|---|---|
| Step 170 | $\begin{matrix}{V}^{\left(1\right)} \left(k\right) \\ = \frac{{V}^{\left(1\right)} \left(k-1\right) \times {C}^{\left(1\right)} + {V}^{\left(2\right)} \left(k-1\right) \times {C}^{\left(2\right)}}{{C}^{\left(1\right)} + {C}^{\left(2\right)}}\end{matrix}$ | V⁽²⁾(p) = *null* |
| | where C⁽¹⁾=C⁽¹⁾(k-1) and C⁽²⁾=C⁽²⁾(k-1) | |
| Step 160 | S⁽¹⁾(k) = S⁽¹⁾(k - 1) + S⁽²⁾(k - 1) + 1 | S⁽²⁾(p) = 0 |
| | C⁽¹⁾(k) = C⁽¹⁾(k - 1) + C⁽²⁾(k - 1) + 1 | C⁽²⁾(p) = 0 |

In case where more than two candidate variables are used: {V^{(j)}(k, p)}ⱼ with J > 1, then, the following table summarizes this embodiment. If x(k, p) ∈ I⁽ⁱ⁾(k, p) for j∈J', with J' a subset of J of more than one element, then:

| x(k, p) ∈ I^{(j)}(k, p) for j∈J' | First selected candidate variable V^{(js1)}(p), here V⁽¹⁾(p). (p is omitted for conciseness) | All other selected candidate variables, j∈J' and j≠js1 (here j≠1) | Non selected candidate variables (j∈J') |
|---|---|---|---|
| Step 170 | $\begin{matrix}{V}^{\left(1\right)} \left(k\right) \\ = \frac{1}{{\sum }_{j ∈ J ′} {C}^{\left(j\right)} \left(k-1\right)} {\sum }_{j ∈ J ′} {V}^{\left(j\right)} \left(\begin{matrix}k \\ - 1\end{matrix}\right) \times {C}^{\left(j\right)} \left(k-1\right)\end{matrix}$ | V^{(j)}(k, p) = *null* | V^{(j)}(k, p) = V^{(j)}(k - 1, p) |
| Step 160 | S⁽¹⁾(k) = ∑_{j∈J}, S^{(j)}(k - 1) + 1 | S^{(j)}(k, p) = 0 | S^{(j)}(k, p) = S^{(j)}(k - 1,p) - 1 |
| | | C^{(j)}(k, p) = 0 | |
| | C⁽¹⁾(k) = ∑_{j∈J}, C^{(j)}(k - 1) + 1 | | C^{(j)}(k,p) = C^{(j)}(k - 1, p) |

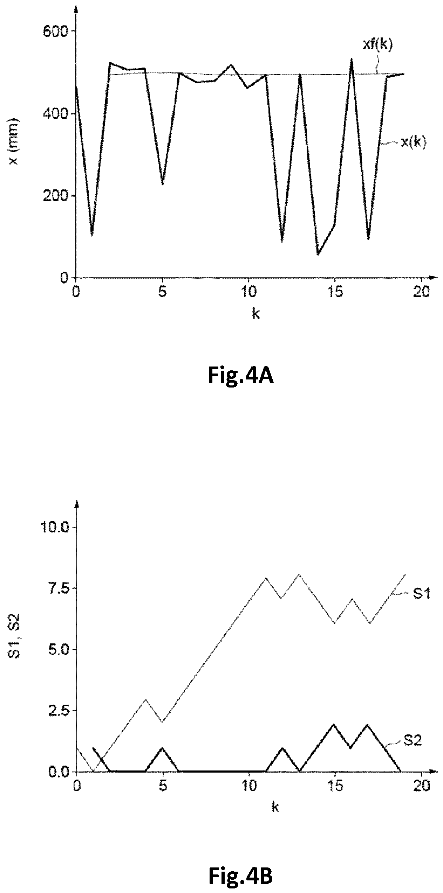

Figures 4A and 4B illustrate an example of filtering a time signal X using the filtering method described above in connection with Fig. 2. Figure 4A shows the time signal x(k,p) output from the sensor device SD, and the filtered time signal xf(k,p) determined by the filtering method. Fig. 4B illustrates the temporal evolution of occurrence scores S⁽¹⁾(k,p) and S⁽²⁾(k,p) associated with candidate variables V⁽¹⁾(k,p) and V⁽²⁾(k,p). In this example, as P=0 (no additional physical parameters), the index p is omitted for conciseness.

In this example, the signal x(k) corresponds to a distance, from the sensor device, of an object situated in a scene. The sensor device can be a ToF sensor.

We consider the successive values of the signal x(k) shown in Figure 4A and in the table below.

| Frame k | x(k) | V⁽¹⁾(k) | V⁽²⁾(k) | S⁽¹⁾(k) | S⁽²⁾(k) | C⁽¹⁾(k) | C⁽²⁾(k) | xf(k) |
|---|---|---|---|---|---|---|---|---|
| 0 | 471 | 471 | NA | 1 | 0 | 1 | 0 | 471 |
| 1 | 105 | 471 | 105 | 0 | 1 | 1 | 1 | 105 |
| 2 | 523 | 497 | 105 | 1 | 0 | 2 | 1 | 497 |
| 3 | 510 | 501 | 105 | 2 | 0 | 3 | 1 | 501 |
| 4 | 513 | 504 | 105 | 3 | 0 | 4 | 1 | 504 |
| 5 | 236 | 504 | 236 | 2 | 1 | 4 | 1 | 504 |

**At the initial instant k=0,** the value x(k=0) is equal to 471mm. Since it is here the first instant, in step 170, this value is stored in the candidate variable V⁽¹⁾: V⁽¹⁾(k) = x(k); and the value V⁽²⁾(k) remains unchanged (here, no prerecorded value).

In step 160, the value S⁽¹⁾(k) is incremented by one unit: S⁽¹⁾(k) = +1, and the value S⁽²⁾(k) remains unchanged: S⁽²⁾(k) = 0. Furthermore, the value C⁽¹⁾(k) is incremented by one unit: C⁽¹⁾(k) = +1, and the value C⁽²⁾(k) remains unchanged: C⁽²⁾(k) = 0.

In step 180, the output value xf(k) of the filtering method, i.e. the value of the filtered signal, is the value of the majority variable (highest score), here V⁽¹⁾. So here we have: xf(k) = V⁽¹⁾(k) = 471.

**At the next instant k=1,** the signal value x(k) is equal to 105.

In step 150, the processing unit PU determines that the value x(k)=105 does not belong to I⁽¹⁾(k). Furthermore, as the value V⁽²⁾(k) is empty, its confidence interval I⁽²⁾(k) is not determined, and the candidate variable V⁽²⁾(k) is then selected (the selected candidate variable V^{(js)} is V⁽²⁾).

In this case, in step 160, the value S⁽¹⁾(k) is decremented by one unit: S⁽¹⁾(k)=S⁽¹⁾(k-1)-1=0, and the value S⁽²⁾(k) is incremented by one unit: S⁽²⁾(k)=S⁽²⁾(k-1)+1=1. Furthermore, the value C⁽¹⁾(k) remains unchanged: C⁽¹⁾(k)=C⁽¹⁾(k-1)=1, and the value C⁽²⁾(k) is incremented by one unit: C⁽²⁾(k)=C⁽²⁾(k-1)+1=1.

In step 170, the value V⁽²⁾(k) is set equal to the arithmetic mean, here weighted by the associated streak counter C⁽²⁾(k), of the stored value V⁽²⁾(k-1) and the current value x(k): V⁽²⁾(k) = α⁽²⁾(k)*x(k)+[1-α⁽²⁾(k)]*V⁽²⁾(k-1) = 105, where α⁽²⁾(k)=1/C⁽²⁾(k). Furthermore, the value V⁽¹⁾(k) remains unchanged: V⁽¹⁾(k)=V⁽¹⁾(k-1)=471.

Finally, in step 180, the output value xf(k) is the value of the majority candidate variable, here V⁽²⁾: xf(k)=V⁽²⁾(k)=105.

**At the next instant k=2,** the current signal value x(k) is equal to 523.

In step 150, the processing unit PU determines that this value x(k) belongs to [⁽¹⁾(k) and not to I⁽²⁾(k). The candidate variable V⁽¹⁾ is then selected (the selected candidate variable V^{(js)} is V⁽¹⁾).

In step 160, the occurrence scores are updated: the value S⁽¹⁾(k) is incremented by one unit: S⁽¹⁾(k)=S⁽¹⁾(k-1)+1, while the value S⁽²⁾ is decremented by one unit: S⁽²⁾(k)=S⁽²⁾(k-1)-1. In addition, the streak counters are updated: the value C⁽¹⁾(k) is incremented by one unit: C⁽¹⁾(k)=C⁽¹⁾(k-1)+1, while the value C⁽²⁾(k) remains unchanged: C⁽²⁾(k)=C⁽²⁾(k-1).

In step 170, the candidate variables are updated. The value V⁽¹⁾(k) is set equal to the arithmetic mean, here weighted by the associated streak counter C⁽¹⁾(k), of the stored value V⁽¹⁾(k-1) and the value x(k): V⁽¹⁾(k) = α⁽¹⁾(k)*x(k)+(1- α⁽¹⁾(k))*V⁽¹⁾(k-1) = 497, where α⁽¹⁾(k)=1/C⁽¹⁾(k). Furthermore, the value V⁽²⁾(k) remains unchanged: V⁽²⁾(k)=V⁽²⁾(k-1)=105.

Finally, in step 180, the output value xf(k) of the filtering method is the value of the majority variable, here V⁽¹⁾: xf(k)=V⁽¹⁾(k).

Now, let's move on to k=5, where the current value x(k) of the signal is equal to 236.

In step 150, the processing unit PU determines that this value x(k) does not belong to either I⁽¹⁾(k) or I⁽²⁾(k). No candidate variable is then selected. A soft reset of the minority candidate variable is then performed, in this case V⁽²⁾ since the value S⁽²⁾(k) is the lowest.

In step 160, the occurrence scores are updated: the value S⁽²⁾(k) is incremented by one unit: S⁽²⁾(k)= +1, while the value S⁽¹⁾(k) is decremented by one unit: S⁽¹⁾(k)=S⁽¹⁾(k-1)-1. In addition, the streak counters are updated: the value C⁽¹⁾(k) is equal to 4 and the value C⁽²⁾(k) is equal to 1.

In step 170, the candidate variables are updated. The value of the majority candidate variable, here V⁽¹⁾, remains unchanged: V⁽¹⁾(k)=V⁽¹⁾(k-1), and the value of the minority variable, here V⁽²⁾, is set equal to the current value x(k): V⁽²⁾(k)=x(k).

Finally, in step 180, the output value xf(k) of the filtering method is the value of the majority candidate variable, here V⁽¹⁾: xf(k)=V⁽¹⁾(k)=504.

As shown in Fig. 4A, the filtered time signal xf(k) shows reduced Gaussian noise centred on the effective value of 500mm, and the flicker noise has also been reduced.

Case of a matrix time signal X(k) associated with several physical parameters X(p) Let's now consider the case of a temporal matrix signal X. The time signal X is formed by a sequence of matrices, the matrix being of dimension N×M: x(k,p)=(x_{(n,m)}(k,p))_{1≤n≤N,1≤m≤M}, with N≥1 and/or M≥1. The matrix is referred to hereafter as (x_{(n,m)}(k,p))_{n,m} for conciseness.

So, the candidate variables, occurrence scores and streak counters are matrices of dimension N×M, at the current instant k.

It may be important to detect whether a temporal variation at the same pixel is due to flicker noise (and therefore to be filtered out), or to a spatial variation of the considered value (displacement of the value from a detection pixel to a neighbouring pixel). This spatial variation may be due to a shift in the information contained in the current matrix of the time signal X.

Figure 5 illustrates a filtering device FD according to one embodiment, configured to implement a filtering method adapted to reduce the noise of a temporal matrix signal.

The filtering device FD is coupled to a sensor device SD configured to measure and estimate the value of a physical parameter at a sampling frequency. Unlike the sensor device in figure 2, the sensor device is here adapted to provide several data maps {x_{n,m}(k,p)}_{n,m} at different successive instants, each data map being associated with a specific physical parameter X(p): P>0.

Steps 210 to 280 are carried out for each matrix value, with n ranging from 1 to N and m ranging from 1 to M. Thus, when they are carried out for a matrix value, they are repeated by moving on to the next value, with n or m being incremented by one unit. Alternatively, these steps can be performed for each matrix value simultaneously (parallel processing, not iterative).

Furthermore, at each step where the element of rank (n,m) is considered, the filtering method processes the value of each physical parameter X(p): x_{(n,m)}(k,0), x_{(n,m)}(k,1), x_{(n,m)}(k,2), etc.

Step 210 of receiving a current value X(k) of the time signal X. The filtering device receives a value x_{(n,m)}(k,p) of rank (n,m) from the matrix (x_{(n,m)}(k,p))_{n,m}, at the current instant k. The processing unit PU determines whether the current instant k corresponds to the initial instant (k = 0) or not (k > 0). If current instant k is the initial instant (k=0), the filtering method continues with steps 260 and 270, and if not (k>0), the filtering method continues with step 220.

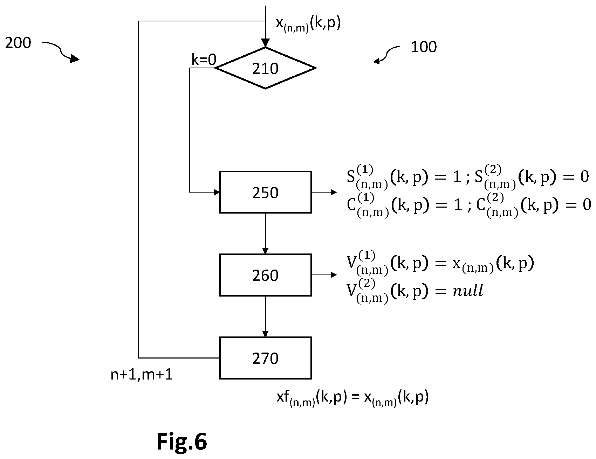

**A/ Let's consider the case where k=0, with reference to** **Figure 6****.** Steps 260 and 270 are similar to steps 160 and 170. They can be performed successively or simultaneously.

Step 260 of updating occurrence scores ${\left\{{S}_{\left(n, m\right)}^{\left(j\right)}\left(k, p\right)\right\}}_{j , p}$. The processing unit PU determines the current value ${S}_{\left(n, m\right)}^{\left(j\right)} \left(k, p\right)$ of each occurrence scores, and, where applicable, the current value ${C}_{\left(n, m\right)}^{\left(j\right)} \left(k, p\right)$ of each streak counters.

Here, it increments the occurrence score ${S}_{\left(n, m\right)}^{\left(1\right)} \left(k, p\right)$ by a predefined value from its initial zero value, for example by one unit +1: ${S}_{\left(n, m\right)}^{\left(1\right)} \left(k, p\right) = 1$, while the occurrence score ${S}_{\left(n, m\right)}^{\left(2\right)} \left(k, p\right)$ remains at zero: ${S}_{\left(n, m\right)}^{\left(1\right)} \left(k, p\right) = 0$. Similarly, the streak counter ${C}_{\left(n, m\right)}^{\left(1\right)} \left(k, p\right)$ is incremented by +1 from its initial value of zero: ${C}_{\left(n, m\right)}^{\left(1\right)} \left(k, p\right) = 1$, while the streak counter ${C}_{\left(n, m\right)}^{\left(2\right)} \left(k, p\right)$ remains at zero: ${C}_{\left(n, m\right)}^{\left(2\right)} \left(k, p\right) = 0$.

Step 270 of updating candidate variables ${\left\{{V}_{\left(n, m\right)}^{\left(j\right)}\left(k, p\right)\right\}}_{j , p}$. The processing unit PU determines the current value ${V}_{\left(n, m\right)}^{\left(j\right)} \left(k, p\right)$ of each candidate variables.

Here, it stores the value x_{(n,m)}(k=0,p) in candidate variable ${V}_{\left(n, m\right)}^{\left(1\right)} \left(k, p\right) : {V}_{\left(n, m\right)}^{\left(1\right)} \left(k=\right.$ 0, p) *= x*_{(*n,m*)}(*k = 0, p).* The value ${V}_{\left(n, m\right)}^{\left(2\right)} \left(k=0,p\right)$ remains unchanged, and may be empty, zero or any other value: ${V}_{\left(n, m\right)}^{\left(2\right)} \left(k=0,p\right) = null$*.*

### B/ Let's now consider the case where k>0.

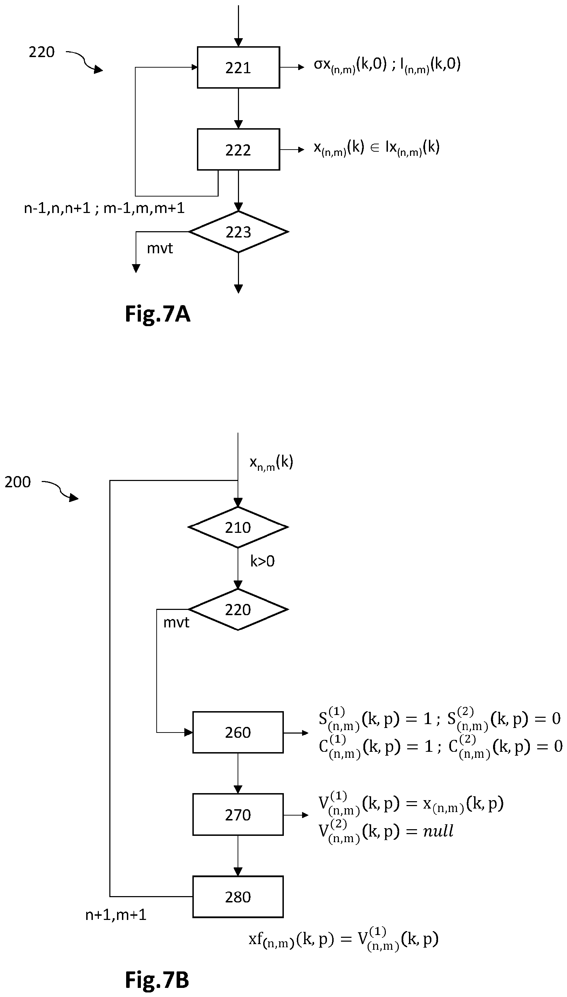

Step 220 of identifying movement. The processing unit PU determines whether any movement or displacement of information present in the current matrix x_{(n,m)}(k,p) has occurred, compared with the previous instant k-1, in order to distinguish it from any flicker noise. Figure 7A illustrates the sub-steps performed during this step 220.

In a sub-step 221, the processing unit PU determines a parameter representative of a Gaussian dispersion centred on the value x_{(n,m)}(k-1,p=0) at the previous instant k-1, for the main physical parameter X(p=0). This is a standard deviation σx_{(n,m)}(k,p=0), but can be variance or other. The standard deviation σx_{(n,m)}(k,0) is determined from at least one additional physical parameter X(p>0) output from the sensor device. We can also use a constant to determine the standard deviation.

In the case of a ToF-type optical sensor, the additional physical parameters may be:
- the amplitude x_{(n,m)}(k,1) = Ar_{(n,m)}(k) of an optical signal emitted toward the scene, then reflected by the scene and detected in return by the ToF sensor;
- the amplitude x_{(n,m)}(k,2) = Amb_{(n,m)}(k) of an optical signal representative of the ambient light level (i.e. without the prior emission of an optical signal toward the scene, intended to be reflected and then detected).

The current value σx_{(n,m)}(k,0) of the standard deviation can then be determined from the current values x_{(n,m)}(k,1) and x_{(n,m)}(k,2).

The processing unit PU then determines a confidence interval Ix_{(n,m)}(k,0), for example at confidence level 3σ (but the confidence level may be different), centred on the value x_{(n,m)}(k-1,0) at the previous instant k-1: Ix_{(n,m)}(k,0) = [ x_{(n,m)}(k-1,0)-3×σx_{(n,m}(k,0) ; x_{(n,m)}(k-1,0)+3×σx_{(n,m)}(k,0)]. This confidence interval represents a Gaussian dispersion of standard deviation σx_{(n,m)}(k,0) centred on the value x_{(n,m)}(k-1,0) of the time signal.

In a sub-step 222, the processing unit PU determines whether the following condition is met: x_{(n,m)}(k,0)∈Ix_{(n,m)}(k,0), i.e. whether the current value x_{(n,m)}(k,0) lies within the confidence interval Ix_{(n,m)}(k,0).

These sub-steps 221 and 222 are also carried out for neighbouring values (neighbouring pixels) of the matrix (x_{(n,m)}(k,0))_{n,m}, for example for the 8 neighbouring values, namely the values (n-1,m-1), (n-1,m), (n-1,m+1); (n,m-1), (n,m+1); (n+1,m-1), (n+1,m), (n+1,m+1): x_{(n-1,m-1)}(k,0) ∈Ix_{(n-1,m-1)}(k,0); x_{n-1,m}(k,0)∈Ix_{(n-1,m)}(k,0); and so on.

In step 223, if the condition is verified in a certain number of pixels including the central pixel and its neighbourhood, this threshold number being predefined, then the processing unit PU considers that there is no movement in the considered pixel (n,m). Otherwise, the processing unit PU considers that there is movement in the considered pixel.

Note that different variants are possible for determining whether movement can be associated with the current value x_{(n,m)}(k,0) of the time signal.

Thus, in one variant, in sub-step 223, the processing unit PU applies a spatial filter to a binary image map, for example the conventional operations of erosion and then dilation. For instance, sub-steps 221 and 222 applied to the full image may create a binary map that contains a certain amount of noise (some pixels that do not satisfy the condition x_{(n,m)}(k,0)∈Ix_{(n,m)}(k,0) might not actually correspond to motion, and vice versa). Step 223 can apply alternative spatial filters, for example a morphological opening (which is an erosion followed by a dilation). The output of this operation is an updated binary map indicating whether there is motion or not.

In another variant, in sub-steps 221 and 222, the processing unit PU may also consider a confidence interval associated not only with the current value x_{(n,m)}(k,0) of the time signal, but also with the amplitude x_{(n,m)}(k,1) of the reflected signal. The two confidence intervals, one associated with the reflected signal x_{n,m}(k,1) and the other with the ambient light x_{n,m}(k,2), can also be considered to identify the presence of movement between instants k-1 and k. This approach is of particular interest in ToF sensors, where an object can move in the scene without its distance varying.

In the event that movement has been determined in the value x_{n,m}(k) of the time signal, the filtering method continues with steps 260 and 270. In this situation, a hard reset operation is performed. Figure 7B illustrates the filtering method steps in this case.

Stepp 260 of updating occurrence scores ${\left\{{S}_{\left(n, m\right)}^{\left(j\right)}\left(k, p\right)\right\}}_{j , p}$. The processing unit PU determines the current value ${S}_{\left(n, m\right)}^{\left(j\right)} \left(k, p\right)$ of each occurrence score, and, where applicable, the current value ${C}_{\left(n, m\right)}^{\left(j\right)} \left(k, p\right)$ of each streak counter.

Here, it resets the values ${S}_{\left(n, m\right)}^{\left(1\right)} \left(k, p\right)$ and ${S}_{\left(n, m\right)}^{\left(2\right)} \left(k, p\right)$ of the occurrence scores to one and zero, respectively: ${S}_{\left(n, m\right)}^{\left(1\right)} \left(k, p\right) = 1$ and ${S}_{\left(n, m\right)}^{\left(2\right)} \left(k, p\right) = 0$ . Similarly, it resets the streak counter values ${C}_{\left(n, m\right)}^{\left(1\right)} \left(k, p\right)$ and ${C}_{\left(n, m\right)}^{\left(2\right)} \left(k, p\right)$ to one and zero, respectively: ${C}_{\left(n, m\right)}^{\left(1\right)} \left(k, p\right) = 1$ and ${C}_{\left(n, m\right)}^{\left(2\right)} \left(k, p\right) = 0$.

Step 270 of updating candidate variables ${\left\{{V}_{\left(n, m\right)}^{\left(j\right)}\left(k, p\right)\right\}}_{j , p}$. The processing unit PU determines the current value ${V}_{\left(n, m\right)}^{\left(j\right)} \left(k, p\right)$ of each candidate variable. Here, it stores the current value x_{(n,m)}(k,p) in candidate variable ${V}_{\left(n, m\right)}^{\left(1\right)} \left(p\right) : {V}_{\left(n, m\right)}^{\left(1\right)} \left(k, p\right) = {x}_{\left(n, m\right)} \left(k, p\right)$ , and remove the value of candidate variable ${V}_{\left(n, m\right)}^{\left(2\right)} \left(p\right) = null$*.*

Finally, in step 280, the processing unit PU provides the value ${V}_{\left(n, m\right)}^{\left(1\right)} \left(k, p\right)$ of the candidate variable ${V}_{\left(n, m\right)}^{\left(1\right)} \left(k, p\right)$ as the output value xf_{(n,m)}(k) of the filtered time signal: ${xf}_{\left(n, m\right)} \left(k, p\right) = {V}_{\left(n, m\right)}^{\left(1\right)} \left(k, p\right)$.

If no movement has been identified in the value x_{(n,m)}(k,0) of the time signal, the filtering method continues with step 230. Note that steps 230, 240, 250, 260, 270 and 280 are then similar to those described with reference to Figure 2.

Step 230 of determining the standard deviations ${\left\{{σ}_{\left(n, m\right)}^{\left(j\right)}\left(k, p\right)\right\}}_{j , p}$. The processing unit PU determines the current value ${σ}_{\left(n, m\right)}^{\left(j\right)} \left(k, p\right)$ of each standard deviation, for each candidate variable (so for each value of the index j) and each physical parameter (so for each value of the index p).

As in step 130, the standard deviations ${σ}_{\left(n, m\right)}^{\left(j\right)} \left(p\right)$ associated with the candidate variables ${V}_{\left(n, m\right)}^{\left(j\right)} \left(p\right)$ can be predetermined and be constant over time.

Alternatively, they can be determined from the amplitude x_{(n,m)}(k,1) of the reflected optical signal and from the amplitude x_{(n,m)}(k,2) of the ambient light.

Step 240 of determining the confidence intervals ${\left\{{I}_{\left(n, m\right)}^{\left(j\right)}\left(k, p\right)\right\}}_{j , p}$ The processing unit PU determines the current value ${I}_{\left(n, m\right)}^{\left(j\right)} \left(k, p\right)$ of each confidence interval, for each candidate variable and for each physical parameter.

As in step 240, the confidence interval ${I}_{\left(n, m\right)}^{\left(j\right)} \left(k, p\right)$ can be defined as ${I}_{\left(n, m\right)}^{\left(j\right)} \left(k, p\right) =$ $\left[{V}_{\left(n, m\right)}^{\left(j\right)}\left(k-1,p\right)-3\times {σ}_{\left(n, m\right)}^{\left(j\right)}\left(k, p\right);{ V}_{\left(n, m\right)}^{\left(j\right)}\left(k-1,p\right)+3\times {σ}_{\left(n, m\right)}^{\left(j\right)}\left(k, p\right)\right]$.

Step 250 of selecting a candidate variable ${V}_{\left(n, m\right)}^{\left(js\right)} \left(p\right)$. The processing unit PU determines whether the current value x_{(n,m)}(k,p) of the time signal is close to the value ${V}_{\left(n, m\right)}^{\left(j\right)} \left(k-1,p\right)$ of one and/or other of the candidate variables, i.e. whether it lies within one and/or other of the confidence intervals ${I}_{\left(n, m\right)}^{\left(j\right)} \left(k, p\right)$. In other words, the processing unit PU determines whether or not: $∀ j , {x}_{\left(n, m\right)} \left(k, p\right) ∈ {I}_{\left(n, m\right)}^{\left(j\right)} \left(k, p\right)$.

Depending on the result, the selected candidate variable ${V}_{\left(n, m\right)}^{\left(js\right)} \left(p\right)$ is then identified, along with its corresponding occurrence score ${S}_{\left(n, m\right)}^{\left(js\right)} \left(p\right)$ and, where applicable, its corresponding occurrence counter ${C}_{\left(n, m\right)}^{\left(js\right)} \left(p\right)$.

As already mentioned, in some embodiments where several physical parameters X(p) with P>0 are considered, the selected candidate variable may be the same for some or all the physical parameters. In other words, to select $\text{V} \left({\left.\text{n} , \text{m}\right)}_{\left(\text{js}\right)}^{}\right. \left(\text{p}\right)$, the condition ${x}_{\left(n, m\right)} \left(k, p\right) ∈ {I}_{\left(n, m\right)}^{\left(js\right)} \left(k, p\right)$ may need to be satisfied for a subset of at least two physical parameters among the P physical parameters, or for all the P physical parameters.

The update rules for steps 260 and 270 are identical or similar to those for steps 160 and 170 described above with reference to Figure 2, and are not repeated here.

Step 280 of providing the filtered current value Xf(k) of the time signal. The processing unit PU determines the output value xf_{(n,m)}(k,p) of the time signal, i.e. the filtered (denoised) value. For this purpose, the output value xf_{(n,m)}(k,p) corresponds to the value ${V}_{\left(n, m\right)}^{\left(jf\right)} \left(k, p\right)$ of the candidate variable ${V}_{\left(n, m\right)}^{\left(jf\right)} \left(p\right)$ with the highest occurrence score ${S}_{\left(n, m\right)}^{\left(jf\right)} \left(k, p\right) : {S}_{\left(n, m\right)}^{\left(jf\right)} \left(k, p\right) = {max}_{j} \left({S}_{\left(n, m\right)}^{\left(j\right)}\left(k, p\right)\right)$.

Steps 210 to 270 are then repeated, incrementing the indices n and m. Alternatively, these steps can be performed simultaneously.

Thus, the filtered value Xf(k) is provided by the filtering device FD: Xf(k) = ${\left\{{\left({xf}_{\left(n, m\right)}\left(k, p\right)\right)}_{n , m}\right\}}_{p} = {\left\{{\left({V}_{\left(n, m\right)}^{\left(jf\right)}\left(k, p\right)\right)}_{n , m}\right\}}_{p}$. In other words, the filtered value Xf(k) is formed of a data map (xf_{(n,m)}(k,p))_{n,m} for each physical parameter X(p). The filtering device provides therefore a filtered data map associated with the main physical parameter X(0), for instance a filtered depth map, but also filtered data maps associated with additional physical parameters X(p>0).

Such a filtering method reduces the temporal noise of a matrix time signal, which would be subject to both Gaussian noise and flicker noise. In addition, computer resources are reduced, since the values stored in the memory MM are the updated values of candidate variables, occurrence scores and, where applicable, streak counters, which replace the previously stored values. Updated values from previous instants are not stored. The filtering method can be carried out in real time.

As mentioned previously, in some embodiments, the sensor device may be a ToF optical sensor device. It may be this described in EP 4 063 899 A1, which is incorporated herein by reference.

The sensor device may comprise an optical source (such as a vertical cavity surface emitting laser VCSEL or light emitting diode LED), a suitable optical source driver, an array of single photon avalanche diode (SPAD) elements and a time to distance converter (TDC) or histogram generator configured to calculate an histogram signal or data representing photon event detection counts for a number of time bins, and a processing mode configured to output the time signal X.

However other configurations may be implemented such as the sensor device comprising an optical source, optical source driver and a fast photodiode detector with steered charge, an analogue to digital converter (ADC) etc.

The optical source may be a light emitting diode, or any known lighting device, for example, a laser diode. The optical signal coming out of the light source is transmitted towards an object and is reflected by the object.

The reflected optical signal is detected by the optical sensor, which in the following examples comprises an array of SPADs. The SPAD array may integrate several photodetection elements in the form of single-photon avalanche diodes (SPAD).

Such detection elements may also be rapid charge transfer photodiodes. The signal output by the sensor is thus phase-shifted from the signal provided by the generator/driver by an angle which correlates with the distance to the object.

A Time to Digital Converter (TDC) may be configured to receive the signals generated by generator/driver and by the sensor and calculate the phase shift (or time difference) between these signals to obtain a distance to object.

In some embodiments, the filtering device FD can determine and provide other parameters at each instant k.

By way of example, a noise reduction factor (TNRF_{(n,m)}(k,p))_{n,m} can be provided, which may correspond to a number of values being temporally averaged associated with the value xf_{(n,m)}(k) of the filtered time signal X. This can be based on the value ${C}_{\left(n, m\right)}^{\left(jf\right)} \left(k, p\right)$ of the streak counter associated with the value xf_{(n,m)}(k,p). For instance, the TNRF_{(n,m)}(k,p) can be defined as: ${TNRF}_{\left(n, m\right)} \left(k, p\right) = 1 / \sqrt{{C}_{\left(n, m\right)}^{\left(jf\right)} \left(k, p\right)}$.

This noise reduction factor provides information on the accuracy associated with the output value xf_{(n,m)}(k): the higher the factor, the greater the accuracy, since a large number of temporal averaging operations have been performed. This factor is reset to one when motion has been identified, but not when flicker noise has been filtered out.

In some embodiments, a confidence indicator map (CONF_{(n,m)}(k,p))_{n,m} may be calculated and output by the filtering method at the current instant k.

The confidence indicator CONF_{(n,m)}(k,p) can be determined in various ways. It can be representative both of a signal-to-noise ratio SNR_{(n,m)}(k,p) associated with the considered value xf_{(n,m)}(k,p) of the filtered time signal, and of a noise reduction factor (e.g. that mentioned above). Thus, the confidence indicator CONF_{(n,m)}(k,p) can be the product of SNR_{(n,m)}(k,p) and TNRF_{(n,m)}(k,p).

The SNR_{(n,m)}(k,p) can be based on the amplitude x_{(n,m)}(k,1) of the reflected optical signal and the amplitude x_{(n,m)}(k,2) of the ambient light. These data maps can be the data maps x_{(n,m)}(k,1) and x_{(n,m)}(k,2) output from the sensor device, or the data maps xf_{(n,m)}(k,1) and xf_{(n,m)}(k,2) provided by the filtering device. Note that the amplitude of the reflected optical signal does not include a component related to ambient light. Thus, the confidence indicator can be written: $\begin{matrix}{CONF}_{\left(n, m\right)} \left(k, p\right) = {SNR}_{\left(n, m\right)} \left(k, p\right) \times {TNRF}_{\left(n, m\right)} \left(k, p\right) \\ = \frac{{xf}_{\left(n, m\right)} \left(k, 1\right)}{\sqrt{{xf}_{\left(n, m\right)} \left(k, 1\right) + {xf}_{\left(n, m\right)} \left(k, 2\right)}} \times \frac{1}{\sqrt{{C}_{\left(n, m\right)}^{\left(jf\right)} \left(k, p\right)}}\end{matrix}$

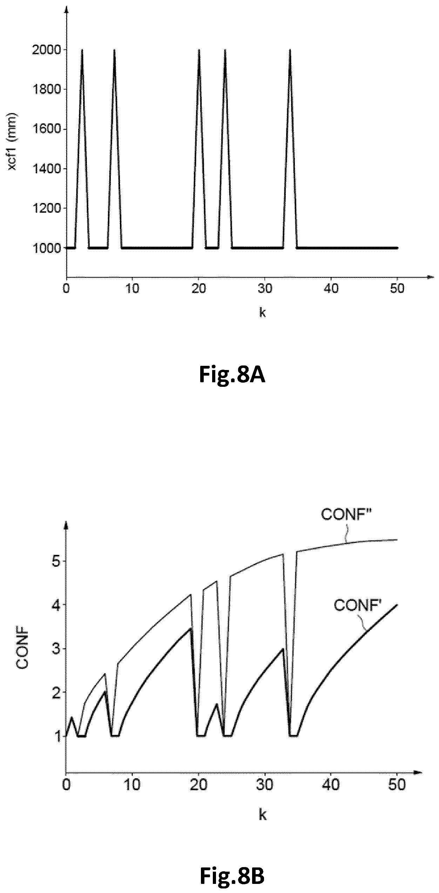

Figures 8A and 8B illustrate an example in which the time evolution of the CONF confidence indicator is compared, in the case of a filtering method according to one embodiment, and in the case of a conventional filtering method.

We consider that the conventional filtering method consist of: 1/ carrying out a first filtering step dedicated on reducing flicker noise from an initial signal xc(k), to obtain a first filtered signal xcf1(k), and 2/ then carrying out a second filtering step dedicated on reducing Gaussian noise from the first filtered signal xcf1(k) to obtain the final filtered signal xcf(k).

Figure 8A shows the first filtered signal xcf1(k) representative of the distance of an object, provided by an optical range sensor, such as a ToF sensor. The object is stationary in the scene, and is distant from the optical sensor by a constant effective distance of 1000mm. The time signal has a constant value of 1000mm, but also has values varying due to flicker noise. Thus, the time signal has erratic values equal to 2000m, far from the effective value of 1000mm.

This signal xcf1(k) has been filtered by the first filtering step dedicated on the flicker noise. However, it appears that some flicker noise remains: indeed all the flicker values have not been filtered. Furthermore, this signal also contains Gaussian noise but this is not perceptible since the Gaussian dispersion is too small compared with the flicker values.

This signal xcf1(k) is then filtered by a second filtering step dedicated on reducing Gaussian noise. The final filtered signal xcf(k) is not shown on Figure 8A. We understand that the Gaussian filtering step cannot reduce the remaining flicker noise.

Figure 8B illustrates the time evolution of the confidence indicator determined by the filtering method according to one embodiment (CONF") and associated with the filtered signal xf(k), for example that of Figure 2 or Figure 5. It also shows the temporal evolution of the confidence indicator determined by a conventional process (CONF') and associated with the final signal xcf(k).

This figure shows the behaviour of the two filtering methods when all the flicker values have not been removed.

It appears that the conventionally determined confidence indicator CONF' increases when the time signal is free of flicker noise. On the other hand, whenever flicker noise is present, the confidence indicator falls back to the value 'one' and then starts again from this value, since a hard reset has been performed. So, the confidence indicator loses the benefit of processing at previous instants, due to the unfiltered flicker values. Flicker noise therefore degrades the confidence evolution associated with the value of the filtered time signal.

On the contrary, the confidence indicator CONF" determined by the filtering method according to one embodiment does not lose, at each unfiltered flicker value, the benefit of the processing at previous instants. In fact, after having fallen to 1 due to a flicker value, the confidence indicator resumes, at the next instant, the progression it had before the flicker. In this way, flicker noise does not degrade the confidence associated with the value of the filtered time signal. This is due to the fact that the filtering method is based on candidate variables and occurrence scores, as explained in detail above.

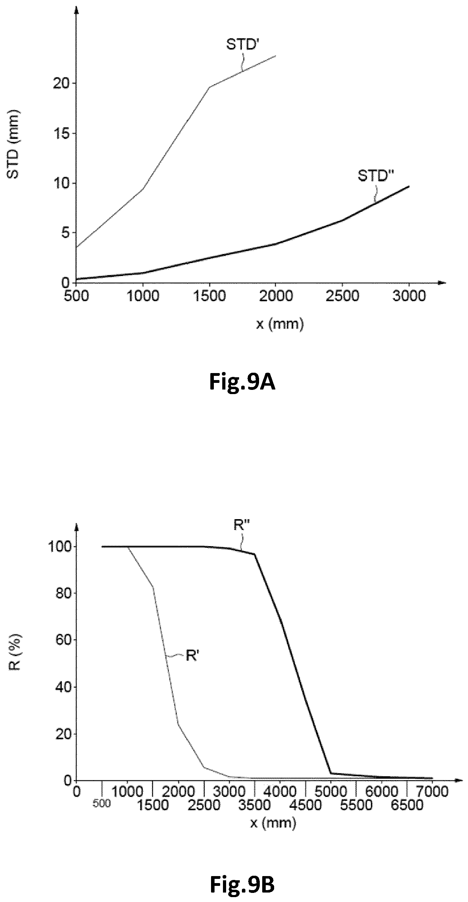

Figures 9A and 9B illustrate a comparison of performances of a sensor system, in the case where it comprises a filtering device according to one embodiment, and in the conventional case where the sensor device is not coupled to a filtering device. In this case, the sensor device is a ToF-type depth sensor.

Figure 9A illustrates the evolution, as a function of distance of an object, of the temporal standard dispersion (STD) associated with a depth map. It appears that, without any temporal filtering, the temporal STD (STD') increases sharply as distance increases, reflecting the strong impact of Gaussian and flicker noise. In contrast, with the filtering method as described above, the temporal STD (STD") increases with a much smaller slope, since both of Gaussian noise and flicker noise have been significantly reduced. Thus, whereas a STD value of 10mm was reached at a distance of 1000mm with the conventional approach, this same value of temporal STD is now reached at 3080mm. The performance of the measurement system has been greatly enhanced by the presence of the filtering device according to one or other of the embodiments.

Figure 9B illustrates the evolution, as a function of object distance, of the valid data rate R. Here, object reflectance is 3% and ambient light is 40 klux. Without any temporal filtering, the threshold rate (R") of 99% is reached at a distance of 1000mm (maximum range). In contrast, with the filtering method according to one embodiment, the threshold rate (R') is now reached at a distance of 3000mm. This illustrates the significant improvement in performance brought about by the filtering device according to either embodiment.

Modes of implementation have just been described. Different variants and modifications will become apparent to the skilled person.

## Claims

1. A filtering method for processing a time signal (X), said filtering method being designed for reducing both Gaussian noise and flicker noise, and being designed for ToF sensor capable of generating depth data map;
• the value (x_{(n,m)}(k,p)) of the time signal (X) at each instant k comprising at least one data map (x_{(n,m)}(k,p)), each being associated with a physical parameter (X(p));
• for each physical parameter (X(p)), J candidate variables ( ${\left\{{V}_{\left(n, m\right)}^{\left(j\right)}\left(p\right)\right\}}_{1 \leq j \leq J}$) are provided, with J≥2, each candidate variable ( ${V}_{\left(n, m\right)}^{\left(j\right)} \left(p\right)$) being associated with an occurrence score ( ${S}_{\left(n, m\right)}^{\left(j\right)} \left(p\right)$) and with a confidence interval ( ${I}_{\left(n, m\right)}^{\left(j\right)} \left(p\right)$);
∘ the method comprising the following steps:
∘ receiving (110, 210) a current value (x_{(n,m)}(k,p)) of the time signal (X), at the current instant k, output from a sensor device;
∘ determining (140, 240) a current value ( ${I}_{\left(n, m\right)}^{\left(j\right)} \left(k, p\right)$) of each confidence interval ( ${I}_{\left(n, m\right)}^{\left(j\right)} \left(p\right)$) at the current instant k;
o selecting (150, 250) a candidate variable ( ${V}_{\left(n, m\right)}^{\left(j=js\right)} \left(p\right)$) when the current value (x_{(n,m)}(k,p)) of the time signal (X) is included in the current value ( ${I}_{\left(n, m\right)}^{\left(js\right)} \left(k, p\right)$) of the corresponding confidence interval ( ${I}_{\left(n, m\right)}^{\left(js\right)} \left(p\right)$);
∘ updating (160, 260) the current value ( ${S}_{\left(n, m\right)}^{\left(j\right)} \left(k, p\right)$) of the occurrence scores ( ${S}_{\left(n, m\right)}^{\left(j\right)} \left(p\right)$), based on the selection step;
∘ when the current value (x_{(n,m)}(k,p)) of the time signal (X) is only included in the current value ( ${I}_{\left(n, m\right)}^{\left(js\right)} \left(k, p\right)$) of the confidence interval associated with the selected candidate variable, then determining (170, 270) a current value ( ${V}_{\left(n, m\right)}^{\left(js\right)} \left(k, p\right)$) of the selected candidate variable ( ${V}_{\left(n, m\right)}^{\left(js\right)} \left(p\right)$) by averaging its precedent value ( ${V}_{\left(n, m\right)}^{\left(js\right)} \left(k-1,p\right)$) at the preceding instant k-1 with the current value (x_{(n,m)}(k,p)) of the time signal (X);
o providing (180, 280) a filtered value (xf_{(n,m)}(k,p)) of the time signal (X) at the current instant k, as being equal to the current value ( ${V}_{\left(n, m\right)}^{\left(jf\right)} \left(k, p\right)$) of the candidate variable ( ${V}_{\left(n, m\right)}^{\left(jf\right)} \left(p\right)$) having the highest occurrence score ( ${S}_{\left(n, m\right)}^{\left(jf\right)} \left(k, p\right)$).

2. The filtering method according to claim 1, comprising, when the current value (x_{(n,m)}(k,p)) of the time signal (X) is only included in the current value ( ${I}_{\left(n, m\right)}^{\left(js\right)} \left(k, p\right)$) of the confidence interval associated with the selected candidate variable:
∘ incrementing (160, 260) the current value ( ${S}_{\left(n, m\right)}^{\left(js\right)} \left(k, p\right)$) of the occurrence score ( ${S}_{\left(n, m\right)}^{\left(js\right)} \left(p\right)$) associated with the selected candidate variable ( ${V}_{\left(n, m\right)}^{\left(j=js\right)} \left(p\right)$), and decrementing the current value ( ${S}_{\left(n, m\right)}^{\left(j\neq js\right)} \left(k, p\right)$) of an occurrence score ( ${S}_{\left(n, m\right)}^{\left(j\neq js\right)} \left(p\right)$) of the unselected candidate variables ( ${V}_{\left(n, m\right)}^{\left(j\neq js\right)} \left(p\right)$);
∘ remaining unchanged (170, 270) the current value ( ${V}_{\left(n, m\right)}^{\left(j\neq js\right)} \left(k, p\right)$) of the unselected candidate variables ( ${V}_{\left(n, m\right)}^{\left(j\neq js\right)} \left(p\right)$).

3. The filtering method according to claim 1 or 2, comprising, when the current value (x_{(n,m)}(k,p)) of the time signal (X) is only included in the current value ( ${I}_{\left(n, m\right)}^{\left(js\right)} \left(k, p\right)$) of the confidence interval associated with the selected candidate variable:
∘ incrementing (160, 260) a current value ( ${C}_{\left(n, m\right)}^{\left(js\right)} \left(k, p\right)$) of a streak counter ( ${C}_{\left(n, m\right)}^{\left(js\right)} \left(p\right)$) associated with the selected candidate variable; and remaining unchanged the current value ( ${C}_{\left(n, m\right)}^{\left(j\neq js\right)} \left(k, p\right)$) of each streak counter ( ${C}_{\left(n, m\right)}^{\left(j\neq js\right)} \left(p\right)$) associated with the unselected candidate variables ( ${V}_{\left(n, m\right)}^{\left(j\neq js\right)} \left(p\right)$).

4. The filtering method according to claim 3, wherein updating (170, 270) a current value ( ${V}_{\left(n, m\right)}^{\left(js\right)} \left(k, p\right)$) of the selected candidate variable ( ${V}_{\left(n, m\right)}^{\left(js\right)} \left(p\right)$) comprises calculate a weighted average of its precedent value ( ${V}_{\left(n, m\right)}^{\left(js\right)} \left(k-1,p\right)$) at the preceding instant k-1 with the current value (x_{(n,m)}(k,p)) of the time signal (X), the current value (x_{(n,m)}(k,p)) of the time signal (X) being weighted by a parameter (α_{(n,m)}(k,p)) equal to the inverse of the corresponding streak counter ( ${C}_{\left(n, m\right)}^{\left(js\right)} \left(k, p\right)$), and its precedent value ( ${V}_{\left(n, m\right)}^{\left(js\right)} \left(k-1,p\right)$) being weighted by one minus this parameter (1 - α_{(n,m)}(k,p)).

5. The filtering method according to any of the claims 1 to 4, comprising, if the current value (x_{(n,m)}(k,p)) of the time signal (X) is not included in any of said confidence intervals ( ${\left\{{I}_{\left(n, m\right)}^{\left(j\right)}\left(p\right)\right\}}_{1 \leq j \leq J}$):
∘ setting (160, 260) to one the current value ( ${S}_{\left(n, m\right)}^{jlS} \left(k, p\right)$) of an occurrence score ( ${S}_{\left(n, m\right)}^{jlS} \left(p\right)$) of the candidate variable ( ${V}_{\left(n, m\right)}^{\left(jlS\right)} \left(p\right)$) with the lowest occurrence score ( ${S}_{\left(n, m\right)}^{\left(jlS\right)} \left(k-1,p\right) = {min }_{j} \left({S}_{\left(n, m\right)}^{\left(j\right)}\left(k-1,p\right)\right)$); and decrementing the current value ( ${S}_{\left(n, m\right)}^{\left(j\neq jlS\right)} \left(k, p\right)$) of the occurrence score ( ${S}_{\left(n, m\right)}^{\left(j\neq jlS\right)} \left(p\right)$) of each candidate variable different from the candidate variable ( ${V}_{\left(n, m\right)}^{\left(jlS\right)} \left(p\right)$) with the lowest occurrence score;
∘ storing (170, 270) the current value (x_{(n,m)}(k,p)) of the time signal (X) in the current value ( ${V}_{\left(n, m\right)}^{\left(jlS\right)} \left(k, p\right)$) of candidate variable ( ${V}_{\left(n, m\right)}^{\left(jlS\right)} \left(p\right)$) with the lowest occurrence score, and remaining unchanged the current value ( ${V}_{\left(n, m\right)}^{\left(j\neq jlS\right)} \left(k, p\right)$) of each candidate variable ( ${V}_{\left(n, m\right)}^{\left(j\neq jlS\right)} \left(p\right)$) different from the candidate variable ( ${V}_{\left(n, m\right)}^{\left(jlS\right)} \left(p\right)$) with the lowest occurrence score.

6. The filtering method according to claim 5, comprising, if the current value (x_{(n,m)}(k,p)) of the time signal **(X)** is not included in any of said confidence intervals $\left({\left\{{I}_{\left(n, m\right)}^{\left(j\right)}\left(p\right)\right\}}_{1 \leq j \leq J}\right)$:
o setting (160, 260) to one the current value ( ${C}_{\left(n, m\right)}^{\left(jlS\right)} \left(k, p\right)$) of a streak counter ( ${C}_{\left(n, m\right)}^{\left(jlS\right)} \left(p\right)$) associated with the candidate variable ( ${V}_{\left(n, m\right)}^{\left(jlS\right)} \left(p\right)$) with the lowest occurrence score; and remaining unchanged the current value ( ${C}_{\left(n, m\right)}^{\left(j\neq jlS\right)} \left(k, p\right)$) of each streak counter ( ${C}_{\left(n, m\right)}^{\left(j\neq jlS\right)} \left(p\right)$) associated with the other candidate variables ( ${V}_{\left(n, m\right)}^{\left(j\neq jlS\right)} \left(p\right)$).

7. The filtering method according to any of claims 1 to 6 and to claim 3, comprising, if the current value (x_{(n,m)}(k,p)) of the time signal (X) is included in J' confidence intervals, with 1<J'≤J, of said confidence intervals ( $\left.{\left\{{I}_{\left(n, m\right)}^{\left(j\right)}\left(p\right)\right\}}_{1 \leq j \leq J}\right)$), then: selecting all the J' corresponding candidate variables:
o for a first selected candidate variable ( ${V}_{\left(n, m\right)}^{\left(js1\right)} \left(p\right)$):
• determining (170, 270) its current value ( ${V}_{\left(n, m\right)}^{\left(js1\right)} \left(k, p\right)$) as being equal to weighted mean of the selected candidate variables ( ${V}_{\left(n, m\right)}^{\left(j∈J′\right)} \left(k, p\right)$) weighted by their corresponding streak counters ( ${C}_{\left(n, m\right)}^{\left(j∈J′\right)} \left(k, p\right)$);
• determining (160, 260) the current value $\left({S}_{\left(n, m\right)}^{\left(js1\right)}\left(k, p\right)\right)$ of the corresponding occurrence score as being equal to the sum of the selected occurrence scores $\left({S}_{\left(n, m\right)}^{\left(j∈J′\right)}\left(k-1,p\right)\right)$ at the precedent instant k-1, plus one; and
• determining (160, 260) the current value $\left({C}_{\left(n, m\right)}^{\left(js1\right)}\left(k, p\right)\right)$ of the corresponding streak counter score as being equal to the sum of the selected streak counters $\left({C}_{\left(n, m\right)}^{\left(j∈J′\right)}\left(k-1,p\right)\right)$ at the precedent instant k-1, plus one;
∘ for the selected candidate variables other than the first selected one:
• removing (170, 270) their current values $\left({V}_{\left(n, m\right)}^{\left(j∈J′;j\neq js1\right)}\left(k, p\right)\right)$;
• setting (160, 260) to zero the current value $\left({S}_{\left(n, m\right)}^{\left(j∈J′;j\neq js1\right)}\left(k, p\right)\right)$ of the corresponding occurrence scores and the current value $\left({C}_{\left(n, m\right)}^{\left(j∈J′;j\neq js1\right)}\left(k, p\right)\right)$ of the corresponding streak counters;
∘ for the unselected candidate variables:
• remaining (170, 270) unchanged the current value $\left({V}_{\left(n, m\right)}^{\left(j∉J′\right)}\left(k, p\right)\right)$ of the candidate variables;
• decrementing (160, 260) the current value $\left({S}_{\left(n, m\right)}^{\left(j∉J′\right)}\left(k, p\right)\right)$ of the corresponding occurrence scores; and remaining unchanged the current value $\left({C}_{\left(n, m\right)}^{\left(j∉J′\right)}\left(k, p\right)\right)$ of the corresponding streak counters.

8. The filtering method according to any of the claims 1 to 7, wherein the current value (x_{(n,m)}(k,p)) of the time signal (X) is a matrix of dimensions N×M, with N>1 and/or M>1, and wherein the steps of the filtered method are executed, at the current instant k, for each element of rank n,m of the current matrix (x_{(n,m)}(k,p)), with n going from 1 to N and m going from 1 to M.

9. The filtering method according to claim 8, comprising:
o identifying (220) a movement of a target in the current value (x_{(n,m)}(k,p)) of the time signal (X), this step being executed before the step of determining (230) confidence intervals;
o if a movement is identified:
• setting (260) to one a current value $\left({S}_{\left(n, m\right)}^{\left(j1\right)}\left(k, p\right)\right)$ of a first occurrence score $\left({S}_{\left(n, m\right)}^{\left(j1\right)}\left(p\right)\right)$ of a first candidate variable $\left({V}_{\left(n, m\right)}^{\left(j1\right)}\left(p\right)\right)$; and, if applicable, setting to one a current value $\left({C}_{\left(n, m\right)}^{\left(j1\right)}\left(k, p\right)\right)$ of a first streak counter $\left({C}_{\left(n, m\right)}^{\left(j1\right)}\left(p\right)\right)$ of the first candidate variable $\left({V}_{\left(n, m\right)}^{\left(j1\right)}\left(p\right)\right)$; and setting to zero a current value $\left({S}_{\left(n, m\right)}^{\left(j\neq j1\right)}\left(k, p\right)\right)$ of the occurrence score $\left({S}_{\left(n, m\right)}^{\left(j\neq j1\right)}\left(p\right)\right)$ of the other candidate variables $\left({V}_{\left(n, m\right)}^{\left(j\neq j1\right)}\left(p\right)\right)$; and, if applicable, setting to zero a current value $\left({C}_{\left(n, m\right)}^{\left(j\neq j1\right)}\left(k, p\right)\right)$ of the first streak counter $\left({C}_{\left(n, m\right)}^{\left(j\neq j1\right)}\left(p\right)\right)$ of the other candidate variables $\left({V}_{\left(n, m\right)}^{\left(j\neq j1\right)}\left(p\right)\right)$;
• setting a current value $\left({V}_{\left(n, m\right)}^{\left(j1\right)}\left(k, p\right)\right)$ of the first candidate variable $\left({V}_{\left(n, m\right)}^{\left(j1\right)}\left(p\right)\right)$ to the current value $\left({x}_{\left(n, m\right)}\left(k, p\right)\right)$ of the time signal (X); and removing the current value $\left({V}_{\left(n, m\right)}^{\left(j1\right)}\left(k, p\right)\right)$ of the other candidate variables $\left({V}_{\left(n, m\right)}^{\left(j\neq j1\right)}\left(p\right)\right)$.

10. The filtering method according to any of the claims 1 to 9, wherein the current value (x_{(n,m)}(k,p)) of the time signal (X) comprises P+1 data maps (x_{(n,m)}(k,p)), with P>0, and wherein the steps of the filtered method are executed, at the current instant k, for each data maps (x_{(n,m)}(k,p)).

11. The filtering method according to claim 10, wherein, in the step (150, 250) of selecting a candidate variable, a candidate variable $\left({V}_{\left(n, m\right)}^{\left(js\right)}\left(k, p\right)\right)$ is selected when the current value (x_{(n,m)}(k,p)) of the time signal (X) is included in the current value $\left({I}_{\left(n, m\right)}^{\left(js\right)}\left(k, p\right)\right)$ of the corresponding confidence interval $\left({I}_{\left(n, m\right)}^{\left(js\right)}\left(p\right)\right)$ for at least two or all the data maps.

12. The filtering method according to any of the claims 1 to 11, comprising:
∘ determining a confidence indicator (CONF_{(n,m)}(k,p)), based on:
• a signal on noise ratio (SNR_{(n,m)}(k,p)) associated with the filtered current value (xf_{(n,m)}(k,p)) of the time signal (X), and
• a noise reduction factor (TNRF_{(n,m)}(k,p)) associated with the filtered current value (xf_{(n,m)}(k,p)) of the time signal (X), and based on a number of values being temporal averaged associated with the value (xf_{(n,m)}(k,p)) of the time signal (X).

13. A filtering device (FD) configured to process a time signal, comprising: a processing unit (PU) configured to execute the filtering method according to any of the preceding claims.

14. A system, comprising:
∘ a sensor device, configured to output a current value (x_{(n,m)}(k,p)) of a time signal (X), at successive instants;
o the filtering device according to the claim 14, coupled to the sensor device for receiving the current value (x_{(n,m)}(k,p)) of the time signal (X) at the current instant k, and configured to provide a filtered value (xf_{(n,m)}(k,p)) of the time signal (X).

15. The system according to claim 14, wherein the sensor device is a ToF device.

16. A non-transitory computer-readable storage medium storing instructions of a computer program for implementing a filtering method according to any of the claims 1 to 12.
